**Europäisches Patentamt**

**European Patent Office**

**Office européen des brevets**

(19)

(11) Numéro de publication : **0 402 224 B1**

(12)

# FASCICULE DE BREVET EUROPEEN

(45) Date de publication du fascicule du brevet :
**07.10.92 Bulletin 92/41**

(51) Int. Cl.$^5$ : **G01P 5/00**

(21) Numéro de dépôt : **90401501.3**

(22) Date de dépôt : **05.06.90**

(54) **Procédé et dispositif de la détermination de la vitesse par rapport à l'air d'un hélicoptère.**

(30) Priorité : **07.06.89 FR 8907514**

(43) Date de publication de la demande :
**12.12.90 Bulletin 90/50**

(45) Mention de la délivrance du brevet :
**07.10.92 Bulletin 92/41**

(84) Etats contractants désignés :
**BE DE FR GB IT NL SE**

(56) Documents cités :
**EP-A- 0 249 848**
**EP-A- 0 280 599**
**EP-A- 0 283 626**

(73) Titulaire : **SEXTANT AVIONIQUE S.A.**
**5/7 rue Jeanne Braconnier Parc Tertiaire**
**F-92366 Meudon la Forêt Cédex (FR)**

(72) Inventeur : **Arethens, Jean-Pierre**
**3 rue Briffaut**
**F-26000 Valence (FR)**
Inventeur : **Gouhier-Beraud, Patrick**
**17 rue du 8 mai 1945**
**F-26000 Valence (FR)**

(74) Mandataire : **Bloch, Gérard et al**
**2, square de l'Avenue du Bois**
**F-75116 Paris (FR)**

EP 0 402 224 B1

Jouve, 18, rue Saint-Denis, 75001 PARIS

## Description

La présente invention a tout d'abord pour objet un procédé de détermination de la vitesse par rapport à l'air d'un hélicoptère en vue de son pilotage, hélicoptère d'axe longitudinal OX, d'axe transversal OY et d'axe vertical OZ, pourvu d'un rotor de sustentation dont le pas collectif $P_O$, le pas cyclique longitudinal $P_X$ et le pas cyclique transversal $P_Y$ sont commandables, ainsi que d'un rotor anticouple dont le pas $P_Z$ est commandable, procédé dans lequel on détermine les deux composantes $V_X$ et $V_Y$ de cette vitesse sur les axes OX et OY, respectivement, en fonction des valeurs commandées desdits pas $P_O$, $P_X$, $P_Y$ et $P_Z$, des valeurs des angles d'inclinaison $\theta_X$ et $\theta_Y$ de l'hélicoptère autour des axes OY et OX, respectivement, et de la valeur d'accélération $\gamma_Z$ de l'hélicoptère selon l'axe OZ.

La vitesse ainsi déterminée est affichée sur le tableau de bord de l'hélicoptère, à l'usage du pilote. En effet, la vitesse de l'hélicoptère par rapport à l'air, souvent appelée vitesse–air, est la vitesse propre de l'hélicoptère par rapport à la masse d'air dans laquelle il se déplace. En l'absence de vent, la vitesse air est la même que la vitesse par rapport au sol, souvent appelée vitesse–sol. En présence de vent, la vitesse–sol est égale à la somme de la vitesse–air et de la vitesse du vent. La vitesse–air est importante pour des raisons de sécurité, car c'est elle qui conditionne, en vol, l'équilibre de l'hélicoptère. Il est donc primordial que le pilote connaisse à tout instant la vitesse–air avec la meilleure précision possible.

Il existe des anémomètres qui permettent de mesurer cette vitesse. Toutefois les anémomètres classiques, qui reposent sur une mesure de pression à l'aide d'un tube de Pitot, par exemple, ne donnent des résultats valables que si la vitesse est supérieure à un certain seuil, couramment de l'ordre de 45 noeuds, par exemple. Les anémomètres à laser ne souffrent pas de cet inconvénient, mais ils sont d'un prix de revient et d'un poids qui rend leur emploi difficile à bord d'un hélicoptère. C'est pourquoi un procédé du type défini ci–dessus, qui ne nécessite pas, pour sa mise en oeuvre, l'embarquement d'un appareillage lourd et spécifique, puisqu'il utilise des grandeurs normalement disponibles à bord d'un hélicoptère, est appréciable.

On connait déjà un procédé du type défini ci–dessus, par la demande française N° 2 613 078, au nom de la demanderesse. Ce procédé est basé sur une modélisation théorique du fonctionnement de l'hélicoptère, modélisation qui permet d'établir des formules qui relient les composantes $V_X$ et $V_Y$ de la vitesse aux pas $P_O$, $P_X$, $P_Y$ et $P_Z$, aux angles d'inclinaison $\theta_X$ et $\theta_Y$ et à l'accélération $\gamma_Z$. Cependant, les valeurs de certains des paramètres intervenant dans ces formules étant difficilement accessibles, on prévoit d'effectuer, pour chaque cas pratique, au moins un vol d'étalonnage permettant une détermination expérimentale des valeurs des coefficients qui interviennent dans les formules théoriques. A cet effet, on fait passer l'hélicoptère par un certain nombre de configurations de vol différentes, pour lesquelles on se donne les moyens d'estimer la vitesse–air, à l'aide de mesures directes ou indirectes, et pour lesquelles on mesure $P_O$, $P_X$, $P_Y$, $P_Z$, $\theta_X$, $\theta_Y$ et $\gamma_Z$. En identifiant la valeur de la vitesse–air estimée et celle fournie par la formule théorique de calcul pour chaque configuration de vol, on obtient un système d'équations dont les inconnues sont les coefficients que l'on veut déterminer. On résout ce système par la méthode des moindres carrés, par exemple. Ainsi, dans le procédé connu, la forme, ou structure, des formules qui permettent le calcul de la vitesse–air sont établies de façon théorique, tandis que les valeurs des coefficients qui interviennent dans ces formules sont déterminées de façon expérimentale.

Toutefois, si ce procédé connu donne, dans certains cas, des résultats satisfaisants, il n'en est pas toujours ainsi, vraisemblablement parce que le modèle théorique du fonctionnement qui lui sert de base ne correspond pas, malgré sa complexité, à la réalité. Il serait sans doute possible d'affiner ce modèle théorique pour un type d'hélicoptère bien déterminé, mais dans ce cas, les calculs effectués pour ce type d'hélicoptère ne seraient pas valables pour un autre type d'hélicoptère, ce qui rend le procédé connu long et coûteux.

La présente invention vise à pallier ces inconvénients en procurant un procédé qui donne, quel que soit le type d'hélicoptère, des résultats toujours précis, sans qu'il soit nécessaire d'effectuer, pour chaque type différent d'hélicoptère, une modélisation théorique différente.

A cet effet, la présente invention a pour objet un procédé du type défini ci–dessus, caractérisé par le fait que :

– au cours d'une première étape, on effectue un vol d'étalonnage faisant passer l'hélicoptère par une pluralité de N configurations de vol différentes, pour chacune desquelles on mesure, d'une part, une pluralité de grandeurs permettant d'estimer les vitesses $V_X$ et $V_Y$, et d'autre part les valeurs des pas $P_O$, $P_X$, $P_Y$ et $P_Z$, des angles $\theta_X$ et $\theta_Y$ et de l'accélération $\gamma_Z$,

– au cours d'une deuxième étape, on estime lesdites vitesses $V_X$ et $V_Y$ lors de chaque configuration de vol, on calcule une première matrice des coefficients de corrélation de tous les couples possibles de variables d'un premier ensemble de variables comprenant la vitesse estimée $\hat{V}_X$ et des variables construites à partir des pas $P_O$, $P_X$, $P_Y$ et $P_Z$, des angles $\theta_X$ et $\theta_Y$ et de l'accélération $\gamma_Z$, et on calcule une deuxième matrice de façon comparable à la première mais relative à un deuxième ensemble de variables comprenant la vitesse estimée $\hat{V}_Y$ et lesdites variables construites,

– au cours d'une troisième étape, on détermine, à l'aide de ladite première matrice, la variable construite du premier ensemble la plus corrélée à la vitesse estimée $\hat{V}_X$, on soustrait de cette vitesse estimée $\hat{V}_X$ ladite variable construite la plus corrélée multipliée par un coefficient multiplicatif choisi pour que la vitesse estimée ainsi modifiée soit totalement decorrélée de ladite variable construite la plus corrélée, on calcule l'erreur commise en admettant que la valeur modifiée est nulle, on calcule une première matrice modifiée comme on a calculé ladite première matrice mais en remplaçant la vitesse estimée $\hat{V}_X$ par la vitesse estimée modifiée, et on recommence ainsi, jusqu'à avoir soustrait de la vitesse estimée $\hat{V}_X$ un nombre $n_x$ de variables construites du premier ensemble, suffisant pour que l'erreur commise, en admettant que la valeur modifiée est nulle, soit inférieure à un seuil, de façon à disposer, pour la valeur de la vitesse estimée $\hat{V}_X$, d'une formule de calcul en fonction de $n_x$ variables construites du premier ensemble, et on procède de même pour la deuxième matrice, de façon à disposer d'une formule semblable pour $\hat{V}_Y$, en fonction de $n_y$ variables construites du deuxième ensemble, et,

– au cours d'une quatrième étape, en vol normal, on mesure les valeurs des pas $P_O$, $P_X$, $P_Y$ et $P_Z$, des angles $\theta_X$ et $\theta_Y$ et de l'accélération $\gamma_Z$, on calcule les vitesses $V_X$ et $V_Y$ en appliquant les formules déterminées au cours de la troisième étape, et en réponse aux valeurs mesurées au cours de la quatrième étape, et on affiche, à l'usage du pilote de l'hélicoptère, les valeurs $V_X$ et $V_Y$ calculées.

Dans le procédé de la présente invention, les formules qui permettent de calculer $V_X$ et $V_Y$ en vol normal sont établies de façon expérimentale, en tenant compte des variables qui sont les plus corrélées aux vitesses estimées $\hat{V}_X$ et $\hat{V}_Y$ sur l'ensemble des configurations de vol du vol d'étalonnage. Il en résulte que, quel que soit le type et les particularités de l'hélicoptère pour lequel on applique le procédé, les formules de calcul de $V_X$ et $V_Y$ collent à la réalité sans qu'il soit nécessaire de changer quoi que ce soit au procédé. Ce résultat remarquable est atteint par la demanderesse notamment car elle applique au cours de la troisième étape et indépendamment à chacune des matrices de coefficients de corrélation, un algorithme qui n'est autre que l'algorithme connu sous le nom de régression pas à pas (en anglais "stepwise régression"). De façon surprenante, les résultats obtenus sont très satisfaisants, alors que les variables considérées ne sont pas indépendantes. Par ailleurs, avec le procédé de l'invention, les formules de calcul de $V_X$ et de $V_Y$ ne risquent pas d'être inutilement complexes, puisque l'on ne tient compte que des variables les plus corrélées avec les composantes $V_X$ et $V_Y$. Cette caractéristique permet, en vol normal, d'avoir un temps de calcul ramené à ce qui est juste nécessaire.

Avantageusement, les variables construites au cours de la deuxième étape à partir des pas $P_O$, $P_X$, $P_Y$ et $P_Z$, des angles $\theta_X$ et $\theta_Y$ et de l'accélération $\gamma_Z$ comprennent :

– des variables simples du premier ordre, à savoir $P_O$, $P_X$, $P_Y$, $P_Z$ et $\gamma_Z$
– des variables combinées du premier ordre, à savoir $P_X-\theta_X$ et $P_Y-\theta_Y$, et,
– des variables simples du second ordre, à savoir les carrés et les produits deux à deux des variables $P_O$, $P_X$, $P_Y$, $P_Z$, $\theta_X$, $\theta_Y$ et $\gamma_Z$.

Dans ce cas, l'expérience montre que l'erreur ne varie plus de façon significative au delà d'un nombre $n_x$ ou $n_y$ de variables égal à 15, et parfois même bien avant que cette valeur ne soit atteinte. Le choix des variables combinées $P_X-\theta_X$ et $P_Y-\theta_Y$ est justifié du fait que les modélisations théoriques, ainsi que l'expérience, montrent que ce terme est prépondérant. Il est donc avantageux, du point de vue de la durée des calculs effectués au cours de la troisième étape, de le prévoir parmi les variables construites à partir de $P_O$, $P_X$, $P_Y$, $P_Z$, $\theta_X$, $\theta_Y$ et $\gamma_Z$.

Avantageusement encore, à la fin de la troisième étape, on considère comme des inconnues les $n_x$ et $n_y$ coefficients multiplicatifs des formules de calcul de $V_X$ et de $V_Y$, respectivement, on reporte dans ces formules les résultats des mesures effectuées au cours de la première étape, afin de former au moins un système d'équations linéaires dont les $n_x$ et $n_y$ coefficients multiplicatifs sont les inconnues, on résout ce système et on corrige, dans les formules de calcul de $V_X$ et de $V_Y$, les valeurs des $n_x$ et $n_y$ coefficients multiplicatifs, respectivement, en les remplaçant par celles ainsi déterminées.

Dans ce cas, l'application de l'algorithme de "stepwise régression" aux matrices de coefficients de corrélation, ou matrice de corrélation, sert uniquement à déterminer la structure des formules, les valeurs numériques des coefficients employés dans ces formules étant déterminées par résolution d'un système d'équations obtenus en reportant, dans ces formules, les résultats des mesures effectuées au cours du vol d'étalonnage. Ceci permet en général d'améliorer la précision relative aux valeurs des coefficients employés dans les formules. De plus, ceci permet, lorsque par exemple on doit changer un capteur sur un hélicoptère dont les formules de calcul étaient connues, de faire un nouvel étalonnage de ces formules sans avoir à repasser par l'étape des matrices de corrélation et de la régression pas à pas. En effet, lorsque l'on se contente de changer un capteur sur un hélicoptère, il n'y a aucune raison pour que la structure des formules de calcul de $V_X$ et de $V_Y$ en soit affectée, et seule la valeur numérique des coefficients qui interviennent dans ces calculs risque de se trouver changée. Dans un tel cas, il est suffisant de procéder à un étalonnage comme indiqué ci-dessus, sans reprendre le processus permettant la détermination de la structure des formules.

Dans une première mise en oeuvre du procédé de l'invention, on forme un premier et un deuxième systèmes d'équations linéaires, en identifiant, pour une pluralité de configurations de vol prises parmi les N configurations de vol, la vitesse estimée $\hat{V}_X$ ou $\hat{V}_Y$ obtenue au cours de la deuxième étape, à la quantité obtenue par la formule de calcul correspondante.

Cette première mise en oeuvre est assez simple, mais nécessite, comme cela sera mieux compris dans la suite, de disposer de valeurs estimées $\hat{V}_X$ et $\hat{V}_Y$ assez proches de la réalité. Il peut en être ainsi si on a pris soin d'embarquer, pendant le vol d'étalonnage, un anémomètre laser qui permet de mesurer directement la vitesse–air, par exemple.

Dans une deuxième mise en oeuvre du procédé de l'invention, on mesure, au cours de la première étape, la vitesse par rapport au sol et les angles d'attitude de l'hélicoptère pour chacune des configurations de vol, ainsi que l'instant de datation de celle–ci, et, pour former le système d'équations linéaires, on choisit parmi les configurations de vol, des paires de configurations de vol d'instants de datation suffisamment proches pour admettre que le vent est le même dans ces deux configurations de vol, on transpose dans le repère terrestre, et pour chaque configuration de vol, le résultat de la mesure de la vitesse par rapport au sol et les formules de calcul des composantes de la vitesse par rapport à l'air, et on prend pour équations à résoudre celles obtenues en identifiant la variation mesurée de la vitesse par rapport au sol de l'hélicoptère entre les deux configurations d'une paire, et la variation calculée à l'aide des formules de calcul, de la vitesse par rapport à l'air de l'hélicoptère.

En utilisant ce procédé, on n'utilise, pour le calcul des coefficients des formules de calcul, que les mesures de vitesse sol et d'attitude effectuées au cours du vol d'étalonnage, mesures dont le résultat est connu avec une bonne précision.

Dans une troisième mise en oeuvre du procédé de l'invention, on mesure, au cours de la première étape, la vitesse par rapport au sol et les angles d'attitude de l'hélicoptère pour chacune des configurations de vol, ainsi que l'instant de datation de celle–ci, et, pour former le système d'équations linéaires, on admet que le vent suit, dans le repère terrestre, une loi polynomiale en fonction du temps de coefficients inconnus, on transpose la vitesse du vent dans le repère hélicoptère pour chaque configuration de vol, et on identifie, pour une pluralité de configurations de vols prises parmi les N configurations de vol, le résultat de la mesure de la vitesse par rapport au sol à la somme de la vitesse du vent et de la vitesse par rapport à l'air obtenue par les formules de calcul de $V_X$ et $V_Y$, de façon à déterminer en même temps les $n_x$ et $n_y$ coefficients multiplicatifs et les coefficients inconnus de la loi polynomiale du vent.

Dans ce cas, le temps de calcul est un peu plus long, car le système comprend davantage d'inconnues, mais la précision du résultat est accrue.

Avantageusement encore, au cours de la première étape, on détermine les N configurations de vol différentes afin qu'un nombre minimal d'entre elles appartienne à chacun des sous–domaines du domaine des configurations possibles de l'hélicoptère en vol normal, chaque sous–domaine étant défini par un ensemble de plages de valeurs des grandeurs mesurées pour chaque configuration de vol.

On assure ainsi une bonne répartition des configurations de vol pour lesquelles on effectue les mesures, afin que les matrices de corrélation soient bien représentatives de l'ensemble des phénomènes susceptibles de se produire en vol normal.

Avantageusement encore, on mesure, au cours de la première étape, la vitesse par rapport au sol et les angles d'attitude de l'hélicoptère, ainsi que le module de la vitesse par rapport à l'air de l'hélicoptère, on admet que le vent moyen dans le repère terrestre est resté constant pendant le vol d'étalonnage, on forme une pluralité d'équations, chaque équation identifiant, pour une configuration de vol et dans le repère terrestre, le module mesuré de la vitesse par rapport à l'air et le module calculé de la différence entre la vitesse par rapport au sol et la vitesse du vent, on soustrait membre à membre, et deux à deux, ces équations, on résout le système d'équations ainsi formé, pour calculer la vitesse du vent moyen pendant le vol d'étalonnage, et, au cours de la deuxième étape, on transpose la vitesse du vent moyen ainsi calculée dans le repère hélicoptère pour estimer la vitesse–air comme somme de la vitesse par rapport au sol et de la vitesse du vent moyen.

Dans ce cas, il n'est pas nécessaire d'embarquer un anémomètre laser, par exemple, pendant le vol d'étalonnage. En effet, avec le procédé ci–dessus il est possible d'estimer les composantes $V_X$ et $V_Y$ de la vitesse–air au cours du vol d'étalonnage à partir de la seule connaissance du module de cette vitesse, des trois composantes de la vitesse sol et des angles d'attitude au cours de ce vol. Or le module de la vitesse–air est mesurable, au moins lorsqu'il est supérieur à un certain seuil, par le capteur anémobarométrique normalement prévu sur l'hélicoptère, et les composantes de la vitesse sol, l'attitude et le cap sont des grandeurs normalement disponibles à bord d'un hélicoptère. Le procédé ci–dessus repose sur l'hypothèse que le vent, mesuré dans le repère terrestre, reste le même pendant toute la durée du vol d'étalonnage. Les composantes du vent moyen sont alors calculées à partir de l'ensemble des configurations de vol pour lesquelles on dispose d'une mesure valable du module de la vitesse–air. Ensuite, pour estimer les composantes de la vitesse air dans chaque configuration de vol, on utilise les composantes de la vitesse sol mesurée dans cette configuration et celle du vent moyen déterminée comme ci–dessus.

Avantageusement encore, on mesure, au cours de la quatrième étape en vol normal, à l'aide de moyens anémobarométriques, la vitesse de l'hélicoptère par rapport à l'air, et en réponse à la valeur de la vitesse anémobarométrique ainsi mesurée, on sélectionne, comme valeur de la vitesse par rapport à l'air, le résultat de la mesure, celui du calcul par les formules de calcul déterminées au cours de la troisième étape, ou une combinaison des deux.

Dans ce cas, on utilise les résultats de la mesure anémobarométrique lorsque celle–ci est valable, c'est–à–dire lorsque la vitesse air est suffisamment élevée, par exemple.

La présente invention a également pour objet un dispositif pour la mise en oeuvre du procédé de l'invention, caractérisé par le fait qu'il comprend :

– des moyens pour mesurer, au cours d'une première étape au cours de laquelle est effectué un vol d'étalonnage faisant passer l'hélicoptère par une pluralité de N configurations de vol différentes, d'une part une pluralité de grandeurs permettant d'estimer les vitesses $V_X$ et $V_Y$, et d'autre part les valeurs des pas $P_O$, $P_X$, $P_Y$ et $P_Z$, des angles $\theta_X$, $\theta_Y$ et de l'accélération $\gamma_Z$,

– des moyens pour estimer, au cours dune deuxième étape, lesdites vitesses $V_X$ et $V_Y$ lors de chaque configuration de vol, pour calculer une première matrice des coefficients de corrélation de tous les couples possibles de variables d'un premier ensemble de variables comprenant la vitesse estimée $\hat{V}_X$ et des variables construites à partir des pas $P_O$, $P_X$, $P_Y$ et $P_Z$, des angles $\theta_X$ et $\theta_Y$ et de l'accélération $\gamma_Z$, et pour calculer une deuxième matrice de façon comparable à la première mais relative à un deuxième ensemble de variables comprenant la vitesse estimée $\hat{V}_Y$ et lesdites variables construites,

– des moyens pour déterminer, au cours d'une troisième étape, et à l'aide de ladite première matrice, la variable construite du premier ensemble la plus corrélée à la vitesse estimée $\hat{V}_X$, pour soustraire de cette vitesse estimée $\hat{V}_X$ ladite variable construite la plus corrélée multipliée par un coefficient multiplicatif choisi pour que la vitesse estimée ainsi modifiée soit totalement decorrelée de ladite variable construite la plus corrélée, pour calculer l'erreur commise en admettant que la valeur modifiée est nulle, pour calculer une première matrice modifiée comme a été calculée ladite première matrice mais en remplaçant la vitesse estimée $\hat{V}_X$ par la vitesse estimée modifiée, et pour recommencer ainsi jusqu'à ce que soient soustraites de la vitesse estimée $\hat{V}_X$ un nombre $n_x$ de variables construites du premier ensemble suffisant pour que l'erreur commise, en admettant que la valeur modifiée est nulle, soit inférieure à un seuil, de façon à disposer pour la valeur de la vitesse estimée $\hat{V}_X$ d'une formule de calcul, en fonction de $n_x$ variables construites du premier ensemble, et pour procéder de même pour la deuxième matrice de façon à disposer d'une formule semblable pour $\hat{V}_Y$, en fonction de $n_y$ variables construites du deuxième ensemble, et,

– des moyens pour mesurer, au cours d'une quatrième étape, en vol normal, les valeurs des pas $P_O$, $P_X$, $P_Y$ et $P_Z$, des angles $\theta_X$ et $\theta_Y$ et de l'accélération $\gamma_Z$, des moyens pour calculer les vitesses $V_X$ et $V_Y$ à l'aide des formules déterminées au cours de la troisième étape et en réponse aux valeurs mesurées au cours de la quatrième étape, et des moyens pour afficher, à l'usage du pilote de l'hélicoptère, les valeurs $V_X$ et $V_Y$ calculées.

La présente invention sera mieux comprise à la lecture de la description suivante de la mise en oeuvre préférée du procédé de l'invention, et de la forme de réalisation préférée du dispositif de l'invention, et de quelques variantes, faite en se référant aux dessins annexés, sur lesquels,

– la figure 1 représente schématiquement un hélicoptère en cours de vol, et,

– la figure 2 représente un schéma par blocs du dispositif de l'invention, embarqué à bord de l'hélicoptère de la figure 1.

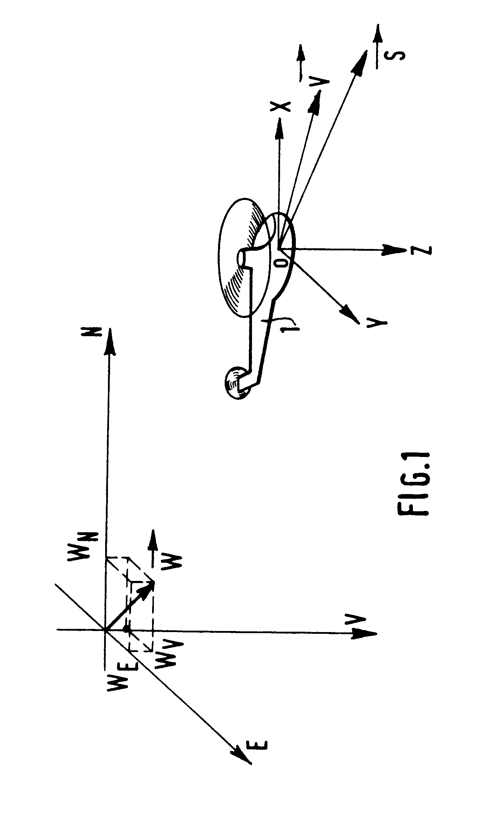

En se référant à la figure 1, un hélicoptère 1 est représenté en cours de vol.

L'hélicoptère 1 est animé, par rapport à la masse d'air dans laquelle il se déplace, d'une vitesse propre, ou vitesse air, représentée par un vecteur $\overrightarrow{V\cdot}$ Il est animé, par rapport au sol, d'une vitesse représentée par un vecteur $\overrightarrow{S\cdot}$ qui est ici différente de sa vitesse propre $\overrightarrow{V}$ du fait de l'existence d'un vent qui entraîne la masse d'air dans laquelle se déplace l'hélicoptère 1 à une vitesse, par rapport au sol, représentée par un vecteur vent $\overrightarrow{W\cdot}$

Le procédé et le dispositif de l'invention permettent la détermination, à bord de l'hélicoptère 1, et à partir des informations délivrées par ses instruments de bord, de sa vitesse propre, ou vitesse air $\overrightarrow{V\cdot}$

De façon connue, un repère OXYZ est lié à l'hélicoptère 1, l'axe OX étant un axe longitudinal dirigé vers l'avant de l'hélicoptère 1, l'axe OY étant un axe transversal dirigé vers la droite de son pilote, et l'axe OZ un axe dirigé vers le bas, ici confondu avec l'axe du moyeu de son rotor.

De même, le repère terrestre comprend ici un axe N dirigé vers le Nord, un axe E dirigé vers l'Est , et un axe V dirigé verticalement vers le bas.

Ici, on s'intéresse essentiellement aux deux composantes de la vitesse air selon les axes OX et OY, notées $V_X$ et $V_Y$ respectivement.

De façon connue, l'hélicoptère 1 est pourvu d'un rotor de sustentation pourvu de pales dont le pas collectif $P_O$, le pas cyclique longitudinal $P_X$ et le pas cyclique transversal $P_Y$ sont commandables. Le pas ou angle de calage d'une paie est l'angle que fait la corde de portance nulle de son profil avec le plan de rotation des pales. Le pas collectif $P_O$ représente l'angle de calage moyen de l'ensemble des pales, étant entendu qu'il est prévu de pouvoir faire varier de façon cyclique, au cours de chaque tour du rotor, l'angle de calage instantané de chaque pale autour de sa valeur moyenne. Les pas cycliques $P_X$ et $P_Y$ correspondent aux variations cycliques de l'angle de calage. Les pas $P_O$, $P_X$ et $P_Y$ sont commandés par le pilote de l'hélicoptère qui agit à cet effet sur la position et l'orientation d'un plateau cyclique qui commande lui–même le pas de chacune des pales. Une action sur le pas collectif $P_O$ fait simplement monter ou descendre l'hélicoptère, tandis qu'une action sur les pas cycliques $P_X$ et $P_Y$ fait basculer le disque rotor, c'est–à–dire le disque décrit par les pales et entraîne un déplacement de l'hélicoptère dans le plan horizontal.

Par ailleurs, l'hélicoptère est pourvu d'un rotor anticouple, dont le pas $P_Z$ est lui aussi commandable par le pilote de l'hélicoptère.

Il est connu, notamment par la demande française N° 2 613 078, de déterminer les composantes $V_X$ et $V_Y$ de la vitesse air grâce à des formules de calcul qui les expriment en fonction des valeurs des pas $P_O$, $P_X$, $P_Y$ et $P_Z$ commandées par le pilote, des valeurs des angles d'inclinaisons $\theta_X$ et $\theta_Y$ de l'hélicoptère 1 autour des axes OY et OX respectivement, ainsi que de la valeur de l'accélération $\gamma_Z$ de l'hélicoptère 1 selon l'axe OZ. Dans la mesure où les valeurs de $P_O$, $P_X$, $P_Y$, $P_Z$, $\theta_X$, $\theta_Y$ et $\gamma_Z$ sont facilement disponibles à bord de l'hélicoptère, en sortie de capteurs de déplacement, inclinomètres et accéléromètres appropriés, un tel procédé est de mise en oeuvre facile.

Le procédé de l'invention prévoit, comme le procédé connu, d'établir des formules permettant le calcul de $V_X$ et de $V_Y$ à partir de la connaissance de $P_O$, $P_X$, $P_Y$, $P_Z$, $\theta_X$, $\theta_Y$ et $\gamma_Z$. Néanmoins, il diffère de ce procédé connu par le fait qu'il prévoit d'établir la structure de ces formules non pas à partir d'un modèle théorique du fonctionnement de l'hélicoptère, mais à partir de données expérimentales recueillies au cours d'un vol d'étalonnage, comme cela va maintenant être décrit.

Le procédé de l'invention commence donc par une première étape au cours de laquelle un vol d'étalonnage est effectué Au cours de ce vol, l'hélicoptère passe par une pluralité de N configurations de vol différentes. Pour chacune d'entre elles on mesure d'une part les valeurs de $P_O$, $P_X$, $P_Y$, $P_Z$, $\theta_X$, $\theta_Y$ et $\gamma_Z$ d'autre part une pluralité de grandeurs permettant d'estimer les composantes $V_X$ et $V_Y$ de la vitesse air.

Dans le cas où l'on prévoit d'embarquer un anémomètre laser au cours du vol d'étalonnage, cette pluralité de grandeurs comprend simplement les valeurs des composantes $V_X$ et $V_Y$ directement fournies par l'anémomètre laser. Cependant, compte tenu du coût et du poids d'un tel anémomètre laser, il en est rarement ainsi. Dans ce cas, le procédé de l'invention prévoit de mesurer, en vue de l'estimation ultérieure des vitesses $V_X$ et $V_Y$, les grandeurs suivantes :

– les trois composantes $S_X$, $S_Y$ et $S_Z$ de la vitesse sol $\overrightarrow{S}$ dans le repère OXYZ,
– les trois angles d'attitude, de l'hélicoptère 1, c'est–à–dire les angles de cap $\psi$, de tangage $\theta$, et de roulis $\varphi$, et,

– le module V de la vitesse air $\overrightarrow{V}$

On notera ici que toutes ces grandeurs sont normalement disponibles à bord de l'hélicoptère 1, les composantes $S_X$, $S_Y$ et $S_Z$ en sortie d'un dispositif de mesure de la vitesse sol, les angles $\psi$, $\theta$ et $\varphi$ en sortie de la centrale d'attitude et le module V en sortie d'un capteur anémobarométrique de type connu, comprenant par exemple un tube de Pitot. Toutefois, et comme cela a déjà été signalé, le résultat de la mesure faite par le capteur anémobarométrique n'est valable que si le module V est supérieur à un seuil déterminé $V_S$, valant par exemple 45 noeuds.

Avant que ne soit expliqué comment, au cours de la deuxième étape du procédé de l'invention, on estime les composantes $V_X$ et $V_Y$ à partir de $S_X$, $S_Y$, $S_Z$, $\psi$, $\theta$, $\varphi$ et V, les critères de choix des configurations de vol pour lesquelles sont effectuées, au cours de la première étape, les mesures, sont maintenant exposés.

Ces critères de choix obéissent à deux principes :
– les configurations de vol retenues doivent représenter des configurations d'équilibre stable de l'hélicoptère 1,

– la répartition des configurations de vol retenues doit être représentative de l'ensemble des conditions d'utilisation de l'hélicoptère en vol normal.

En conséquence, sur le nombre total de configurations de vol qui pourraient être retenues au cours du vol d'étalonnage, un certain nombre seulement le sont.

Le nombre total de configurations qui pourraient être retenues est lié à la cadence de mesure des différents capteurs et appareils qui délivrent les grandeurs mesurées. Dans le cas décrit, ces capteurs et appareils sont commandés pour que, toutes les 250 ms, un nouveau jeu de paramètres $P_O$, $P_X$, $P_Y$, $P_Z$, $\theta_X$, $\theta_Y$, $\gamma_Z$, $S_X$, $S_Y$, $S_Z$, $\psi$, $\theta$, $\varphi$ et V soit disponible.

Chaque jeu de paramètres disponible est donc mémorisé à titre provisoire, et ne le sera à titre définitif que s'il satisfait à un certain nombre de critères.

C'est ainsi que les dérivées par rapport au temps des expressions $P_X-\theta_X$ et $P_Y-\theta_Y$ sont calculées en permanence, et que tout jeu de paramètre disponible à un instant où l'une de ces dérivées est supérieure à un seuil qui lui est propre n'est pas retenu. En effet, il est connu que, en première approximation, les vitesses $V_X$ et $V_Y$ sont proportionnelles aux expressions $P_X-\theta_X$ et $P_Y-\theta_Y$ respectivement. On évite ainsi de retenir des configurations de vol relatives aux phases de fortes accélérations et de régime transitoire, qui conduiraient à de mauvais résultats.

De plus, afin d'éliminer les configurations de vol instables, on ne retient que celles pour lesquelles un nombre déterminé de jeux de paramètres successifs stables a été retenu, nombre par exemple égal à quatre. A cet effet, la valeur moyenne de chacun des paramètres sur les quatre jeux successifs est calculée, ainsi que l'écart type de ce paramètre, qui est comparé à un seuil propre à ce paramètre. Si les écart types de tous les paramètres sont inférieurs à leurs seuils respectifs, alors une configuration de vol est retenue. Dans cette configuration, la valeur retenue pour chaque paramètre est la valeur moyenne calculée sur les quatre jeux successifs.

Enfin, afin d'assurer une bonne répartition des configurations de vol retenues dans tout le domaine des configurations possibles de l'hélicoptère 1 en vol normal, il est prévu de diviser ce domaine en un certain nombre de sous-domaines, et d'assurer, dans chacun de ces sous-domaines, un nombre de configurations de vol retenues compris entre une valeur maximale et une valeur minimale

Ici, et à titre d'exemple, les sous-domaines sont au nombre de 12, et ils sont définis de la façon suivante.

Tout d'abord, 8 sous-domaines, numérotés de 1 à 8, correspondent à des vitesses air faibles, c'est-à-dire dont le module V est inférieur au seuil $V_S$ en deçà duquel la mesure de ce module par le capteur anémobarométrique est entachée d'erreur. Les sous-domaines 1 à 8 correspondent aux critères suivants, les vitesses étant exprimées en noeuds :

– sous-domaine 1, ou de montée :
$$S_Z < -2,5$$

– sous-domaine 2, ou de descente :
$$2,5 < S_Z$$

– sous-domaine 3, ou stationnaire :
$$-10 < S_X < +30$$
$$-7,5 < S_Y < +7,5$$
$$-2,5 < S_Z < +2,5$$

– sous-domaine 4, ou d'hybridation :
$$30 < S_X < 60$$
$$-7,5 < S_Y < +7,5$$
$$-2,5 < S_Z < +2,5$$

– sous-domaine 5, ou latéral gauche :
$$O < S_X$$
$$S_Y < -7,5$$
$$-2,5 < S_Z < +2,5$$

– sous-domaine 6, ou latéral droit :
$$O < S_X$$
$$+7,5 < S_Y$$
$$-2,5 < S_Z < +2,5$$

– sous-domaine 7, ou arrière :
$$S_X < -10$$
$$-2,5 < S_Z < +2,5$$

– sous-domaine 8, ou virage :
$$20°/s < d\,\psi/dt$$
$$-2,5 < S_Z < +2,5$$

Ensuite, 4 sous-domaines, numérotés de 9 à 12, correspondent à des vitesses air élevées, c'est-à-dire dont le module Y est supérieur au seuil $V_S$ au delà duquel la mesure de ce module par le capteur anémobarométrique est valable. Les sous–domaines 9 à 12 correspondent aux critères suivants :

– sous–domaine 9, ou de palier :

$$- 2,5 < S_Z < + 2,5$$

– sous–domaine 10, ou de montée :

$$S_Z < - 2,5$$

– sous–domaine 11, ou de descente :

$$+ 2,5 < S_Z$$

– sous–domaine 12, ou de virage :

$$20°/s < d\psi/dt$$
$$- 2,5 < S_Z < + 2,5$$

Lorsqu'une configuration de vol a été retenue comme n'appartenant pas à une phase d'accélération trop forte, et comme suffisamment stable, on détermine dans quel sous–domaine elle est susceptible d'être classée, en faisant des essais sur les valeurs des paramètres V, $S_X$, $S_Y$ et $S_Z$, ainsi que sur la valeur de la dérivée par rapport au temps de l'angle de cap $\psi$, pour cette configuration de vol.

Lorsque le sous–domaine dans lequel la configuration de vol à classer est susceptible d'être classée est déterminé, on regarde si le nombre maximal de configuration classées dans ce sous–domaine est atteint. Si tel est le cas, le sous–domaine est plein, et la configuration à classer est rejetée.

Si le sous–domaine n'est pas plein, l'écart entre la configuration à classer et chacune des configurations déjà classées est calculé. Si cet écart est supérieur à un seuil pour chaque configuration déjà classée, alors la configuration à classer est effectivement classée dans son sous–domaine. L'écart calculé ici est le carré des différences entre les deux valeurs de la composante $S_X$ et les deux valeurs de la composante $S_Y$.

Le classement comprend essentiellement la mémorisation des paramètres $P_O$, $P_X$, $P_Y$, $P_Z$, $\theta_X$, $\theta_Y$, $\gamma_Z$, $S_X$, $S_Y$, $S_Z$, V, $\psi$, $\theta$ et $\varphi$ ainsi que de données de datation de la configuration de vol. Comme données de datation, on choisit ici le rang de classement de la configuration et l'intervalle de temps qui la sépare de la configuration de rang précédent, que cette configuration soit ou non classée dans le même sous–domaine. Ainsi on peut rétablir si nécessaire la chronologie du classement et connaître l'instant auquel les données relatives à toute configuration de vol classée ont été mesurées.

Au cours du vol d'étalonnage, le pilote commande l'hélicoptère 1 pour permettre le classement d'un nombre suffisant de points de vol dans chaque sous–domaine. Il est prévenu dès qu'un point est classé dans un sous–domaine, et il est informé sur l'état de remplissage des divers sous–domaines. Dès que le nombre minimal de points est atteint dans chacun des sous–domaines 1 à 12, le vol d'étalonnage est terminé.

La deuxième étape du procédé peut alors commencer. Celle–ci est effectuée en temps différé, après la première étape d'acquisition des valeurs de $P_O$, $P_X$, $P_Y$, $P_Z$, $\theta_X$, $\theta_Y$, $\gamma_Z$ $S_X$, $S_Y$, $S_Z$, V, $\psi$, $\theta$ et $\varphi$ pour les N configurations de vols régulièrement réparties dans le domaine des configurations possibles pour l'hélicoptère 1.

La première tâche effectuée au cours de la deuxième étape concerne l'estimation des composantes $V_X$ et $V_Y$ de la vitesse air pour chacune des configurations de vol classées, à partir de la seule connaissance des valeurs de $S_X$, $S_Y$, $S_Z$, V, $\psi$, $\theta$ et $\varphi$ pour cette configuration. Cette estimation repose ici sur l'hypothèse que le vent, exprimé dans le repère terrestre, est resté constant au cours de la durée du vol d'étalonnage. Les composantes $W_N$, $W_E$ et $W_V$ de ce vent, exprimé dans le repère terrestre, sont alors déterminées. La connaissance de la vitesse du vent $\overrightarrow{W}$ ainsi déterminée, et de la vitesse sol $\overrightarrow{S}$ mesurée pour chaque configuration de vol permet d'estimer la vitesse sol $\overrightarrow{V}$ pour chaque configuration de vol, compte tenu de la relation connue :

$$\overrightarrow{S} = \overrightarrow{V} + \overrightarrow{W} \qquad\qquad (1)$$

Pour déterminer les composantes du vent moyen, au cours du vol d'étalonnage, on utilise les configurations de vol classées dans le sous–domaine 9, car, dans ce sous–domaine, la mesure du module V de la vitesse air est valable et la composante $V_Z$ est proche de zéro. On suppose que le nombre de configurations de vol classées dans ce sous–domaine est égal à n.

On calcule d'abord, pour chaque configuration de vol du sous–domaine 9 les trois composantes $S_N$, $S_E$ et $S_V$ du vecteur $\overrightarrow{S}$ dans le repère terrestre, à partir de ses composantes $S_X$, $S_Y$ et $S_Z$ mesurées dans le repère hélicoptère. Une telle transposition se fait à partir de formules de changement de repère bien connues de l'homme du métier, qui font intervenir les angles d'attitude $\psi$, $\theta$ et $\varphi$. On dispose donc, pour chaque configuration de vol, de rang i, de quatre grandeurs scalaires qui sont :

– le module $V_i$ du vecteur $\overrightarrow{V}$, et,

– les trois composantes $S_{Ni}$, $S_{Ei}$ et $S_{Vi}$ du vecteur $\overrightarrow{S}$ dans le repère terrestre.
Or, la relation (1) peut s'écrire :

$$\overrightarrow{S} - \overrightarrow{W} = \overrightarrow{V} \qquad (2)$$

La relation (2), écrite en module et à l'instant $t_i$, fournit l'équation :

$$(S_{Ni} - W_N)^2 + (S_{Ei} - W_E)^2 + (S_{Vi} - W_V)^2 = V_i^2 \quad (3)$$

L'équation (3) traduit le fait que, dans le repère terrestre, l'extrémité du vecteur $\overrightarrow{W}$ se trouve sur une sphère $SP_i$ centrée au point de coordonnées ($S_{Ni}$, $S_{Ei}$, et $S_{Vi}$) et de rayon $V_i$.

On dispose donc de n équations telles que la relation (3), chacune d'entre elles étant relative à un instant de rang i différent.

Si l'on soustrait membre à membre l'équation relative à l'instant $t_i$ de celle relative à l'instant $t_j$, on obtient l'équation :

$$(S_{Nj} - W_N)^2 - (S_{Ni} - W_N)^2$$
$$+ (S_{Ej} - W_E)^2 - (S_{Ei} - W_E)^2$$
$$+ (S_{Vj} - W_V)^2 - (S_{Vi} - W_V)^2$$
$$= V_j^2 - V_i^2 \quad (4)$$

qui devient

$$2(S_{Ni} - S_{Nj}) W_N + 2 (S_{Ei} - S_{Ej}) W_E + 2 (S_{Vi} - S_{Vj}) W_V$$
$$= S_{Ni}^2 - S_{Nj}^2 + S_{Ei}^2 - S_{Ej}^2 + S_{Vi}^2 - S_{Vj}^2 + V_j^2 - V_i^2 \quad (5)$$

L'équation (5) traduit le fait que, dans le repère terrestre, l'extrémité du vecteur $\overrightarrow{W}$ se trouve sur le plan radical de la sphère $SP_i$ et de la sphère $SP_j$, c'est–à–dire le plan qui contient le cercle selon lequel ces deux sphères se coupent, lorsque celles–ci ont au moins un point commun, ce qui est, en principe, le cas ici.

En écrivant toutes les équations telles que (5) pour tous les couples i, j, i étant différent de j, on obtient un système de n (n–1)/2 équations à trois inconnues $W_N$, $W_E$ et $W_V$.

On résout alors ce système par la méthode des moindres carrés pour déterminer les trois inconnues $W_N$, $W_E$ et $W_V$, qui sont les trois composantes du vent moyen à déterminer.

Dans le procédé ci–dessus, on comprend que c'est le fait de résoudre le système de n (n–1)/2 équations par régression linéaire qui introduit un moyennage sur les composantes $W_N$, $W_E$ et $W_V$.

En effet, si l'on se place dans une situation théorique idéale, où le vecteur $\overrightarrow{W}$ est rigoureusement constant et où les mesures de $V_i$, $S_{Ni}$, $S_{Ei}$ et $S_{Vi}$ sont exactes, il suffit de trois équations telles que l'équation (5) pour déterminer $W_N$, $W_E$ et $W_N$. Dans ce cas, les trois sphères définies par ces trois équations ont un point commun et un seul dont les trois coordonnées sont les trois composantes recherchées. Dans ce cas idéal, la multiplication des instants de mesure permet de former d'autres groupes de trois sphères dont le point commun est toujours le même.

Toutefois, dans les cas pratiques où le vecteur $\overrightarrow{W}$ varie légèrement entre deux instants de mesure et où les mesures de $V_i$, $S_{Ni}$, $S_{Ei}$ et $S_{Vi}$ sont entachées d'erreurs, on comprend que les n sphères d'équation (5) n'ont plus, à proprement parler, un point commun et que ce point commun éclate, en fait, en un nuage de points, nuage de volume plus ou moins large à l'intérieur duquel passent toutes les sphères.

Dans ce cas, le procédé ci–dessus apporte une solution au problème posé par la détermination des coordonnées moyennes de ce volume. De plus, le passage par les équations (5) des plans radicaux, et l'application de la méthode des moindres carrés au système d'équations (5) conduit à un résultat qui se révèle tout à fait satisfaisant, à l'égard de la précision du résultat comme à l'égard du temps de calcul.

Dans le cas particulier où la composante du vent vertical est faible, on peut simplifier le procédé de l'invention, afin de gagner du temps de calcul pour la résolution du système d'équations. En effet, si le vent vertical est faible, on peut admettre que la composante $V_{Vi}$ selon l'axe vertical du repère terrestre, de la vitesse propre $\overrightarrow{V}$ de l'hélicoptère vaut :

$$V_{Vi} = V_i \sin \theta_i \quad (6)$$

expression dans laquelle $\theta_i$ est l'angle de tangage mesuré au même instant $t_i$ que le module $V_i$ de la vitesse propre $\overrightarrow{V}$.

La projection de la relation (2) sur l'axe vertical du repère terrestre fournit l'équation :

$$S_{Vi} - W_{vi} = V_i \sin \theta_i \quad (7)$$

ce qui permet immédiatement la détermination de $W_{vi}$ et de la composante $W_V$ comme moyenne de $W_{Vi}$, selon la relation

$$W_V = (1/i) \sum_{k=1}^{i} S_{Vk} - V_k \sin \theta_k \qquad (8)$$

La projection de la relation (2) sur le plan horizontal du repère terrestre fournit l'équation :

$$(S_{Ni} - W_N)^2 + (S_{Ei} - W_E)^2 = V_i^2 \cos^2\theta_i \quad (9)$$

L'équation (9) traduit le fait que, dans le plan horizontal, l'extrémité de la projection du vecteur $\overrightarrow{W}$ se trouve sur un cercle $C_i$ centré au point de coordonnées $(S_{Ni}, S_{Ei})$ et de rayon $V_i \cos \theta_i$.

On dispose donc de n équations telles que la relation (9) . Si on soustrait membre à membre l'équation relative à l'instant $t_i$ de celle relative à l'instant $t_j$, on obtient l'équation :

$$(S_{Nj} - W_N)^2 - (S_{Ni} - W_N)^2$$
$$+ (S_{Ej} - W_E)^2 - (S_{Ei} - W_E)^2$$
$$= V_j^2 \cos^2 \theta_j - V_i^2 \cos^2\theta_i \quad (10)$$

qui devient

$$2(S_{Ni} - S_{Nj}) W_N + 2 (S_{Ei} - S_{Ej}) W_E$$
$$= S_{Ni}^2 - S_{Nj}^2 + S_{Ei}^2 - S_{Ej}^2 + V_j^2 \cos^2\theta_j - V_i^2 \cos^2\theta_i \quad (11)$$

L'équation (11) traduit le fait que, dans le plan horizontal, la projection de l'extrémité du vecteur $\overrightarrow{W}$ se trouve sur l'axe radical du cercle $C_i$ et du cercle $C_j$, c'est-à-dire de la droite qui contient les deux points d'intersection de ces deux cercles.

On obtient alors, comme précédemment, un système de n(n−1)/2 équations, mais à deux inconnues $W_N$ et $W_E$ seulement, système que l'on résout par la méthode des moindres carrés.

Lorsque les composantes $W_N$, $W_E$ et $W_Z$ du vent moyen au cours du vol d'étalonnage ont été déterminées à partir des données relatives aux configurations de vol classées dans le sous-domaine 9, on calcule les composantes $W_{Xi}$ et $W_{Yi}$ du vent moyen dans le repère OXYZ de l'hélicoptère 1 pour chacune des N configurations classées dans l'ensemble des sous-domaines 1 à 12. A cet effet, on utilise les formules connues de changement de repère, avec les valeurs mesurées $\psi_i$, $\theta_i$ et $\varphi_i$ des angles d'attitude pour chaque configuration. L'application de la relation (2) dans le repère OXYZ permet de déterminer les valeurs estimées $\hat{V}_{Xi}$ et $\hat{V}_{Yi}$ de la vitesse air par les formules :

$$\left.\begin{array}{l} \widehat{V}_{Xi} = S_{Xi} - W_{Xi} \\ \widehat{V}_{Yi} = S_{Yi} - W_{Yi} \end{array}\right\} \quad (12)$$

On aborde alors la deuxième tâche de la deuxième étape du procédé de l'invention, qui concerne la formation de deux matrices de corrélation, une relative à la vitesse estimée $\hat{V}_X$, et l'autre relative à la vitesse estimée $\hat{V}_Y$.

A cet effet, on calcule d'abord, pour chacune des N configurations de vol, les valeurs d'un certain nombre de variables construites à partir des pas $P_O$, $P_X$, $P_Y$ et $P_Z$, des angles $\theta_X$ et $\theta_Y$, et de l'accélération $\gamma_Z$. Ici, ces variables construites comprennent :

– 5 variables simples du premier ordre, à savoir $P_O$, $P_X$, $P_Y$, $P_Z$ et $\gamma_Z$,

– 2 variables combinées du premier ordre, à savoir $P_X-\theta_X$ et $P_Y-\theta_Y$, et,

– 28 variables simples du second ordre, à savoir les carrés et les produits deux à deux des variables $P_O$, $P_X$, $P_Y$, $P_Z$, $\theta_X$, $\theta_Y$ et $\gamma_Z$.

Les 28 variables simples du second ordre comprenant tous les carrés $P_O^2$, $P_X^2$, ..., $\gamma_Z^2$ et tous les produits

deux à deux $P_OP_X$, $P_OP_y$, ..., $\theta_Y\gamma_Z$.

On forme alors un premier ensemble d'ici 36 variables comprenant les 35 variables construites précédentes et la vitesse estimée $\hat{V}_X$. Ces 36 variables prennent chacune M valeurs, chacune de ces M valeurs étant relative à une des M configurations de vol classées dans les sous–domaines 1 à 8 au cours du vol d'étalonnage.

Il est donc possible de calculer, pour chacun des couples possibles de ces 36 variables, un coefficient de corrélation qui traduit le fait que les variations des valeurs de chaque variable du couple, sur les M configurations de vol, sont plus ou moins corrélées. La formule de calcul d'un tel coefficient à partir des M valeurs différentes de chaque variable est bien connue de l'homme de métier. Comme une façon habituelle de présenter les résultats de ces calculs est de former un tableau d'ici 36 lignes sur 36 colonnes, d'affecter chacune des 36 variables à chacune des 36 lignes et à chacune des 36 colonnes, et de placer le coefficient de corrélation de chaque couple au croisement de la ligne et de la colonne correspondant à ce couple, on dit que l'on calcule la matrice des coefficients de corrélation, ou matrice de corrélation.

On forme également un deuxième ensemble comprenant les 35 variables construites précédemment et la vitesse estimée $\hat{V}_Y$, pour lequel on calcule la matrice de corrélation. Toutefois, pour la vitesse estimée $\hat{V}_Y$, on tient compte, pour le calcul de la matrice de corrélation, des N configurations de vol classées dans les sous–domaines 1 à 12, et non pas seulement de M configurations de vol classées dans les sous–domaines 1 à 9. En effet, comme cela a été indiqué, les sous–domaines 9 à 12 correspondent à un module V de la vitesse air supérieur au seuil $V_S$ par exemple égal à 45 noeuds. Or, dans ce cas, non seulement la mesure de ce module est valable, mais de plus, la disposition du tube de Pitot est telle que l'on peut admettre que

$$Y_X \simeq V \quad (13)$$

Il en résulte que, en pratique, lorsque le module V est supérieur au seuil $V_S$, on ne détermine pas $V_X$ par le calcul, mais on utilise le résultat de la mesure anémobarométrique. Il est donc inutile de prendre en compte les données relatives aux sous–domaines 9 à 12 pour établir les formules de calcul de la vitesse $V_X$, puisque pour des configurations comparables survenant en cours de vol normal, on n'utilisera pas la formule de calcul de $V_X$. Par contre, on tient compte de la totalité des sous–domaines pour la vitesse $V_Y$, car on détermine toujours cette vitesse par le calcul.

Les deux matrices de corrélation étant ainsi construites, on détermine, au cours de la troisième étape, les formules qui permettront de calculer, en vol normal les composantes $V_X$ et $V_Y$ en fonction des grandeurs $P_O$, $P_X$, $P_Y$, $P_Z$, $\theta_X$, $\theta_Y$ et $\gamma_Z$.

A cet effet, et en considérant d'abord le cas de la composante $V_X$, on détermine d'abord la variable construite la plus corrélée à la vitesse estimée $\hat{V}_X$. Pour cela on détermine, à l'aide de la matrice de corrélation relative à $\hat{V}_X$, la variable construite dont le coefficient de corrélation avec $\hat{V}_X$ est le plus élevé. En principe, et comme la théorie et l'expérience le confirment, cette première variable la plus corrélée s'avère être la variable $(P_X–\theta_X)$.

On soustrait alors de la vitesse estimée $\hat{V}_X$ la variable la plus corrélée, ici $(P_X- \theta_X)$ multiplié par un coefficient multiplicatif $a_1$ choisi pour que la vitesse estimée modifiée soit totalement décorrélée de $(P_X - \theta_X)$. Si on appele $\hat{V}_{Xm}$ la vitesse estimée modifiée, on peut écrire :

$$\hat{V}_{Xm} = \hat{V}_X - a_1(P_X - \theta_X) \quad (14)$$

La valeur du coefficient $a_1$ est liée à celle du coefficient de corrélation et aux valeurs moyennes de $\hat{V}_X$ et de $(P_X- \theta_X)$ par une loi bien connue de l'homme de métier.

On calcule également l'erreur commise en admettant que la valeur modifiée $\hat{V}_{Xm}$ est nulle, c'est-à-dire que la vitesse estimée $V_X$ est égale au produit de la variable la plus corrélée $(P_X - \theta_X)$ par le coefficient multiplicatif $a_1$.

On calcule alors une matrice de corrélation modifiée, en remplaçant la vitesse estimée $\hat{V}_X$ par la vitesse estimée modifiée $\hat{V}_{Xm}$. On détermine alors la variable la plus corrélée à la vitesse estimée modifiée $\hat{V}_{Xm}$, ou deuxième variable la plus corrélée à la vitesse $\hat{V}_X$. Supposons ici que cette variable soit la variable $P_XP_Z$.

On soustrait alors $P_XP_Z$, multipliée par un coefficient multiplicatif $a_2$, pour que la variable estimée modifiée une deuxième fois, se trouve totalement décorrélée de la variable $P_XP_Z$. La variable modifiée une deuxième fois vaut alors :

$$\hat{V}_{Xm} - a_1(P_X - \theta_X) - a_2P_XP_Z \quad (15)$$

On calcule l'erreur commise en admettant que cette valeur modifiée est nulle, et ainsi de suite.

On recommence ainsi jusqu'à avoir soustrait de la vitesse estimée $\hat{V}_X$ un nombre $n_x$ de variables, ici au plus égal à 15, suffisant pour que l'erreur commise soit inférieure à un seuil donné.

En admettant que l'erreur est nulle, on dispose alors d'une formule qui permet de calculer la vitesse estimée $\hat{V}_X$ en fonction des $n_x$ variables les plus corrélées, c'est-à-dire en fonction de $P_O$, $P_X$, $P_Y$, $P_Z$, $\theta_X$, $\theta_Y$ et $\gamma_Z$.

Pour un type d'hélicoptère, cette formule de calcul pourra être de la forme :

$$\hat{V}_X = a_1(P_X - \theta_X) + a_2P_XP_Z + ... + a_{nx}\gamma_Z^2 \quad (16)$$

tandis que pour un autre type, elle pourra être de la forme :

$$\hat{V}_X = a'_1(P_X - \theta_X) + a'_2 P_X^2 + ... + a'_{nx} P_Y \theta_Z \quad (16')$$

et ainsi de suite.

On notera que l'algorithme défini ci–dessus est celui connu sous le nom de régression pas à pas, ou, selon la terminologie anglo–saxonne plus répandue, "stepwise régression".

En appliquant le même algorithme à la matrice de corrélation relative à la vitesse estimée $\hat{V}_Y$, on aboutit à une formule semblable, par exemple de la forme :

$$\hat{V}_Y = b_1(P_Y - \theta_Y) + b_2 P_Y \theta_X + ... + b_{ny} P_Z^2 \quad (17)$$

ou encore de la forme :

$$\hat{V}_Y = b'_1(P_Y - \theta_Y) + b'_2 \theta_X^2 + .... + b'_{ny} P_y P_Z \quad (17')$$

On utilise alors les formules (16) et (17), ou, le cas échéant, les formules (16') et (17') pour calculer, au cours de la quatrième et dernière étape du procédé de l'invention, les valeurs des vitesses $V_X$ et $V_Y$ en fonction des valeurs de $P_O$, $P_X$, $P_Y$, $P_Z$, $\theta_X$, $\theta_Y$ et $\gamma_Z$ mesurées en permanence au cours du vol normal et pour afficher les valeurs calculées $V_X$ et $V_Y$ devant le pilote de l'hélicoptère 1.

Cependant si le procédé tel qu'il vient d'être décrit est très efficace pour déterminer la forme, ou la structure des formules de calcul, il se peut dans certains cas qu'il conduise à des valeurs numériques des coefficients multiplicatifs tels que $a_i$ et $b_i$ qui manquent de précision.

Par structure des formules de calcul, il faut entendre ici le nombre et la nature des variables construites qu'elles font intervenir, indépendamment des valeurs numériques des coefficients multiplicatifs affectant ces variables dans les formules. Par exemple, les formules (16) et (16') sont de structure différente dans la mesure où la variable $P_Y \theta_X$ intervient dans la formule (16) et non dans la formule (16').

Pour obtenir des valeurs plus précises pour les coefficients multiplicatifs $a_i$ et $b_i$, le procédé de l'invention prévoit donc, à titre de perfectionnement, d'utiliser les formules de calcul dont la structure est déterminée comme cela a été décrit, mais dont les valeurs des coefficients multiplicatifs $a_i$ et $b_i$ peuvent être calculés indépendamment de façon plus précise, afin de corriger leurs valeurs obtenues précédemment.

A cet effet, il est possible, à la fin de la troisième étape, lorsque la structure de chacune des deux formules de calcul est connue, de considérer les coefficients multiplicatifs $a_i$ et $b_i$ comme des inconnues. En reportant, dans la formule donnant $V_X$, et pour chacune des M configurations de vol appartenant aux sous–domaines 1 à 8, les résultats des mesures relatives à $P_O$, $P_X$, $P_Y$, $P_Z$, $\theta_X$, $\theta_Y$ et $\gamma_Z$ effectuées au cours de la première étape, et en identifiant la quantité ainsi obtenue à la vitesse $\hat{V}_X$ estimée au cours de la deuxième étape, on obtient un système de M équations linéaires dont les $n_x$ inconnues sont les coefficients multiplicatifs $a_i$. Une résolution de ce système par la méthode des moindres carrés permet de déterminer avec une bonne précision les valeurs des coefficients $a_i$. On corrige alors les valeurs de ces coefficients dans la formule destinée au calcul de $V_X$ en vol normal, en remplaçant leurs anciennes valeurs par celles ainsi déterminées.

On procède de même pour la détermination des coefficients $b_i$ intervenant dans la formule de calcul de $V_Y$, en considérant cette fois l'ensemble des N configurations de vol des sous–domaines 1 à 12.

Il est possible d'améliorer, selon une première variante du procédé de l'invention, le calcul des coefficients multiplicatifs $a_i$ et $b_i$, sans avoir à faire l'hypothèse que le vent reste constant pendant toute la durée du vol d'étalonnage, hypothèse qui, on le rappelle, est nécessaire pour l'estimation des vitesses $V_X$ et $V_Y$ dans chaque configuration de vol du vol d'étalonnage.

Selon cette première variante, on choisit, parmi les M configurations de vol des domaines 1 à 8, des paires de configurations de vol d'instants de datation suffisamment proches pour que l'on puisse admettre que le vent est resté le même entre ces deux configurations.

A cet effet, après avoir fixé un intervalle de temps maximal, entre deux configurations, intervalle de temps en deçà duquel on peut admettre que le vent est resté le même, on part, par exemple, de la dernière configuration de vol classée, et on remonte systématiquement la suite des configurations de vols classées, en formant des paires appartenant toutes deux aux sous–domaines 1 à 8, séparées par un intervalle de temps inférieur à l'intervalle de temps maximal admis. Afin d'éviter de prendre plusieurs fois la même configuration de vol dans des paires différentes, on marque toute configuration prise dans une paire.

Pour chacune des deux configurations de chaque paire, par exemple la configuration de rang k et celle de rang $\ell$, on transpose dans le repère terrestre, les résultats $\overrightarrow{S_k}$ et $\overrightarrow{S_\ell}$ des mesures de la vitesse de l'hélicoptère par rapport au sol, grâce aux formules connues de changement de repère.

De même, on transpose dans le repère terrestre les résultats $\overrightarrow{v_k}$ et $\overrightarrow{v_\ell}$ donnés par les formules de calcul de la vitesse air.

Comme le vent est supposé constant entre les deux configurations, on peut écrire, dans le repère terrestre :

$$\vec{S_k} - \vec{S_\ell} = \vec{V_k} - \vec{V_\ell} \qquad\qquad (18)$$

La formule (18) traduit le fait que la variation mesurée de la vitesse par rapport au sol de l'hélicoptère entre les deux configurations de rang i et j est égale à la variation calculée, à l'aide de formules de calcul, de la vitesse air de l'hélicoptère 1, puisque l'on suppose que le vent n'a pas varié entre ces deux configurations.

Le report, dans l'équation (18), des résultats mesurés dans chaque configuration de vol, les coefficients $a_i$ et $b_i$ étant considérés comme des inconnues, permet d'établir, pour chaque paire de configurations, une équation linéaire. La résolution du système d'équations linéaires ainsi obtenu par la méthode des moindres carrés permet la détermination des coefficients $a_i$ et $b_i$ et permet donc l'identification simultanée des formules de calcul de $V_X$ et de $V_Y$ sur les sous-domaines 1 à 8.

Pour prendre en compte les points des sous-domaines 9 à 12 pour l'identification de la formule de calcul de $V_Y$, un processus analogue peut être repris sur l'ensemble des domaines 1 à 12, en prenant pour vitesse $V_X$ celle donnée par la formule de calcul pour les points des sous-domaines 1 à 8, et celle mesurée par le capteur anémobarométrique pour les points des sous-domaines 9 à 12.

Selon une deuxième variante, on peut, au lieu de former des paires de points, admettre que le vent suit, dans le repère terrestre, une loi polynomiale en fonction du temps, de coefficients inconnus, soit, par exemple, en supposant que la composante verticale du vent est nulle :

$$\left.\begin{array}{l} W_N = \displaystyle\sum_{i=o}^{m} \alpha_i\, t_i \\[4em] W_E = \displaystyle\sum_{i=o}^{m} \beta_i\, t_i \end{array}\right\} \qquad (19)$$

En transposant la vitesse $\vec{W}$ dans le repère hélicoptère OXYZ, on obtient alors, pour chaque configuration de vol classée, une équation linéaire en identifiant le résultat de la mesure de la vitesse $\vec{S}$ par rapport au sol à la somme de la vitesse du vent, déduite des relations (19), et de la vitesse par rapport à l'air, obtenue par les formules de calcul. On applique ainsi simplement la relation (1) :

$$\vec{S} = \vec{W} + \vec{V} \qquad\qquad (1)$$

On peut ainsi obtenir un système d'équations linéaires, dont les inconnues sont les coefficients $a_i$, $b_i$, ainsi que les coefficients inconnus $\alpha_i$ et $\beta_i$ de la loi polynomiale du vent.

Naturellement, des simplifications sont possibles si le vol d'étalonnage se produit dans un plan parallèle au sol, car les formules de passage du repère terrestre au repère hélicoptère et inversement ne dépendent plus que de l'angle de cap $\psi$.

De même, lorsque les structures des formules de calcul ont été déterminées et que l'on désire simplement effectuer une nouvelle détermination des coefficients multiplicatifs $a_i$ et $b_i$, il est possible d'effectuer un vol d'étalonnage simplifié.

Comme cela a été indiqué, on prévoit, en réponse au résultat de la mesure du module V de la vitesse air effectué par le capteur anémobarométrique, de sélectionner, comme valeur de la vitesse $V_X$ par rapport à l'air, le résultat de la mesure si celui-ci est supérieur au seuil $V_S$, ou celui du calcul par la formule de calcul, si le résultat de la mesure est inférieur au seuil $V_S$, ou encore une combinaison des deux, dans les cas intermédiaires. Ceux-ci correspondent ici au sous-domaine 4, appelé pour cette raison sous-domaine d'hybridation.

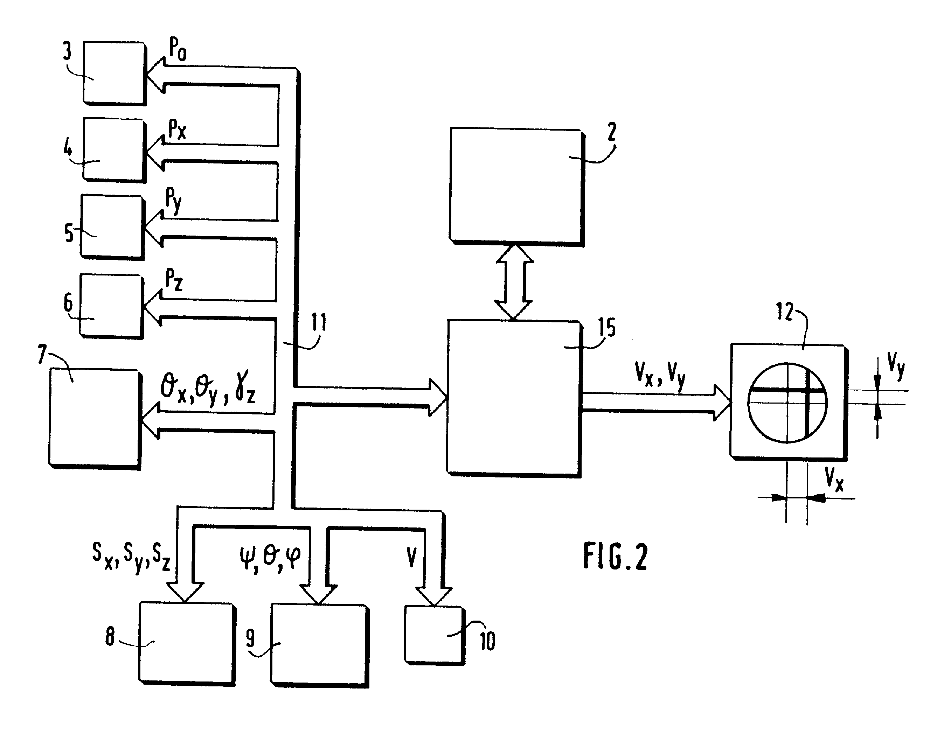

Le procédé de l'invention est mis en oeuvre grâce au dispositif que est maintenant décrit en référence à la figure 2.

L'élément principal du dispositif est un microprocesseur 15, ici du type commercialisé par la société INTEL sous la référence 8086, pourvu d'un circuit de mémoire 2.

Le circuit de mémoire 2 comprend une mémoire de type ROM de 64 k octets, dans laquelle est stocké le programme de commande du microprocesseur, une mémoire de type RAM de 16 k octets et une mémoire de type EEPROM de 16 k octets, ces deux dernières mémoires étant destinées à mémoriser les données manipulées par le microprocesseur 15.

Le microprocesseur 15 est raccordé par un bus 11 aux instruments de bords de l'hélicoptère 1.

Ces instruments comprennent quatre capteurs de déplacement 3, 4, 5 et 6, montés sur les commandes de pas collectif, de pas longitudinal, de pas transversal et de pas du rotor anticouple, respectivement, qui délivrent les grandeurs $P_O$, $P_X$, $P_Y$, et $P_Z$ sous forme numérique, respectivement.

Les instruments de bord comprennent également un dispositif accélérométrique 7, de type connu, qui mesure les trois accélérations $\gamma_X$, $\gamma_Y$ et $\gamma_Z$ de l'hélicoptère 1 le long des axes OX, OY et OZ. Le dispositif accélérométrique 7 est pourvu ici d'une unité de calcul qui calcule les angles d'inclinaison $\theta_X$ et $\theta_Y$ d'après les formules connues :

$$\theta_X = \gamma_X / \gamma_Z \quad (20)$$

et

$$\theta_Y = \gamma_Y / \gamma_Z \quad (21)$$

Si ces angles n'étaient pas calculés dans le dispositif accélérométrique 7, ils pourraient être mesurés par des inclinomètres de type connu.

Le boîtier accélérométrique 7 délivre les grandeurs $\theta_X$, $\theta_Y$ et $\gamma_Z$ sous forme numérique.

Les instruments de bord comprennent également un dispositif 8 de mesure des trois composantes $S_X$, $S_Y$ et $S_Z$ de la vitesse par rapport au sol, dans le repère OXYZ. Un tel dispositif, qui comprend par exemple un radar Doppler, délivre les grandeurs $S_X$, $S_Y$ et $S_Z$ sous forme numérique.

Il est également prévu une centrale d'attitude 9 qui mesure les angles de cap $\psi$, de tangage $\theta$ et de roulis $\varphi$ de l'hélicoptère 1, et les délivre sous forme numérique.

Enfin, un capteur anémobarométrique 10 mesure le module V de la vitesse air et délivre cette grandeur sous forme numérique.

Par ailleurs, il est prévu un indicateur de vol stationnaire 12, du type connu à aiguilles croisées, qui permet au pilote, de prendre connaissance de la vitesse air de composantes $V_X$ et $V_Y$ calculées par le microprocesseur 15. Un tel indicateur comprend deux aiguilles perpendiculaires mobiles en translation perpendiculairement à leurs directions longitudinales respectives. La première est entraînée en un déplacement proportionnel à la composante $V_X$ et la deuxième en un déplacement proportionnel à la composante $V_Y$. Lorsque les composantes $V_X$ et $V_Y$ sont nulles, les aiguilles se croisent au centre du cadran. Lorsque les composantes $V_X$ et $V_Y$ sont non nulles elles se croisent en un point qui s'écarte du centre du cadran de façon représentative du vecteur de composantes $V_X$ et $V_Y$.

Le programme qui commande le microprocesseur 15 est mémorisé dans la mémoire 2. Il est prévu pour que le microprocesseur 15 exécute toutes les tâches qui viennent d'être exposées, et délivre à l'indicateur 11 les données $V_X$ et $V_Y$ en vol normal, calculées à l'aide des formules de calcul déterminées à la suite du vol d'étalonnage.

La programmation du microprocesseur 15 pour qu'il effectue les tâches décrites est évidemment à la portée de l'homme du métier, et ne sera donc pas davantage décrite.

A titre d'exemple, pour un nombre N de points de l'ordre de 300, le temps de calcul nécessaire pour la détermination de la structure des formules de calcul, et pour la détermination des valeurs de leurs coefficients multiplicatifs est de l'ordre de 20 à 40 minutes.

Lorsque, comme cela a été décrit, le microprocesseur 15 commande les instruments de bord pour disposer d'un jeu de paramètres toutes les 250 millisecondes, la durée du vol d'étalonnage est de l'ordre de une heure, toujours dans l'hypothèse où l'on prévoit un nombre N de configurations classées de l'ordre de 300.

## Revendications

1. Procédé de détermination de la vitesse par rapport à l'air d'un hélicoptère en vue de son pilotage, hélicoptère (1) d'axe longitudinal OX, d'axe transversal OY et d'axe vertical OZ, pourvu d'un rotor de sustentation dont le pas collectif $P_O$, le pas cyclique longitudinal $P_X$ et le pas cyclique transversal $P_Y$ sont commandables, ainsi que d'un rotor anticouple dont le pas $P_Z$ est commandable, procédé dans lequel on déterminé les deux composantes $V_X$ et $V_Y$ de cette vitesse sur les axes OX et OY, respectivement, en fonction des valeurs commandées desdits pas $P_O$, $P_X$, $P_Y$ et $P_Z$, des valeurs des angles d'inclinaison $\theta_X$ et $\theta_Y$ de l'hélicoptère (1) autour des axes OY et OX, respectivement, et de la valeur d'accélération $\gamma_Z$ de l'hélicoptère selon l'axe OZ, procédé caractérisé par le fait que :

**14**

– au cours d'une première étape, on effectue un vol d'étalonnage faisant passer l'hélicoptère par une pluralité de $N$ configurations de vol différentes, pour chacune desquelles on mesure, d'une part, une pluralité de grandeurs ($S_X$, $S_Y$, $S_Z$, $\psi$, $\theta$, $\varphi$, $V$) permettant d'estimer les vitesses $V_X$ et $V_Y$, et d'autre part les valeurs des pas $P_O$, $P_X$ $P_Y$ et $P_Z$, des angles $\theta_X$ et $\theta_Y$ et de l'accélération $\gamma_Z$,

– au cours d'une deuxième étape, on estime lesdites vitesses $V_X$ et $V_Y$ lors de chaque configuration de vol, on calcule une première matrice des coefficients de corrélation de tous les couples possibles de variables d'un premier ensemble de variables comprenant la vitesse estimée $\hat{V}_X$ et des variables construites à partir des pas $P_O$, $P_X$, $P_Y$ et $P_Z$, des angles $\theta_X$ et $\theta_Y$ et de l'accélération $\gamma_Z$, et on calcule une deuxième matrice de façon comparable à la première mais relative à un deuxième ensemble de variables comprenant la vitesse estimée $\hat{V}_Y$ et lesdites variables construites,

– au cours d'une troisième étape, on détermine, à l'aide de ladite première matrice, la variable construite du premier ensemble la plus corrélée à la vitesse estimée $\hat{V}_X$, on soustrait de cette vitesse estimée $\hat{V}_X$ ladite variable construite la plus corrélée multipliée par un coefficient multiplicatif choisi pour que la vitesse estimée ainsi modifiée soit totalement décorrélée de ladite variable construite la plus corrélée, on calcule l'erreur commise en admettant que la valeur modifiée est nulle, on calcule une première matrice modifiée comme on a calculé ladite première matrice mais en remplaçant la vitesse estimée $\hat{V}_X$ par la vitesse estimée modifiée, et on recommence ainsi jusqu'à avoir soustrait de la vitesse estimée $\hat{V}_X$ un nombre $n_x$ de variables construites du premier ensemble, suffisant pour que l'erreur commise, en admettant que la valeur modifiée est nulle, soit inférieure à un seuil, de façon à disposer, pour la valeur de la vitesse estimée $\hat{V}_X$, d'une formule de calcul en fonction de $n_x$ variables construites du premier ensemble, et on procède de même pour la deuxième matrice, de façon à disposer d'une formule semblable pour $\hat{V}_Y$, en fonction de $n_y$ variables construites du deuxième ensemble, et,

– au cours d'une quatrième étape, en vol normal, on mesure les valeurs des pas $P_O$, $P_X$, $P_Y$ et $P_Z$, des angles $\theta_X$ et $\theta_Y$ et de l'accélération $\gamma_Z$, on calcule les vitesses $V_X$ et $V_Y$ en appliquant les formules déterminées au cours de la troisième étape, et en réponse aux valeurs mesurées au cours de la quatrième étape, et on affiche, à l'usage du pilote de l'hélicoptère (1), les valeurs $V_X$ et $V_Y$ calculées.

2. Procédé selon la revendication 1, dans lequel les variables construites au cours de la deuxième étape à partir des pas $P_O$, $P_X$, $P_Y$ et $P_Z$, des angles $\theta_X$ et $\theta_Y$ et de l'accélération $\gamma_Z$ comprennent :
– des variables simples du premier ordre, à savoir $P_O$, $P_X$, $P_Y$, $P_Z$ et $\gamma_Z$,
– des variables combinées du premier ordre, à savoir $P_X - \theta_X$ et $P_Y - \theta_Y$, et,
– des variables simples du second ordre, à savoir les carrés et les produits deux à deux des variables $P_O$, $P_X$, $P_Y$, $P_Z$, $\theta_X$, $\theta_Y$ et $\gamma_Z$.

3. Procédé selon l'une des revendications 1 ou 2, dans lequel, à la fin de la troisième étape, on considère comme des inconnues les $n_x$ et $n_y$ coefficients multiplicatifs des formules de calcul de $V_X$ et de $V_Y$, respectivement, on reporte dans ces formules les résultats des mesures effectuées au cours de la première étape, afin de former au moins un système d'équations linéaires dont les $n_x$ et $n_y$ coefficients multiplicatifs, sont les inconnues, on résout ce système et on corrige, dans les formules de calcul de $V_X$ et de $V_Y$, les valeurs des $n_x$ et $n_y$ coefficients multiplicatifs, respectivement, en les remplaçant par celles ainsi déterminées.

4. Procédé selon la revendication 3, dans lequel on résout le système d'équations linéaires par la méthode des moindres carrés.

5. Procédé selon l'une des revendications 3 ou 4, dans lequel, on forme un premier et un deuxième systèmes d'équations linéaires, en identifiant, pour une pluralité de configurations de vol prises parmi les $N$ configurations de vol, la vitesse estimée $\hat{V}_X$ ou $\hat{V}_Y$ obtenue au cours de la deuxième étape, à la quantité obtenue par la formule de calcul correspondante.

6. Procédé selon l'une des revendications 3 ou 4, dans lequel on mesure, au cours de la première étape, la vitesse par rapport au sol et les angles d'attitude de l'hélicoptère pour chacune des configurations de vol, ainsi que l'instant de datation de celle–ci, et, pour former le système d'équations linéaires, on choisit parmi les configurations de vol, des paires de configurations de vol d'instants de datation suffisamment proches pour admettre que le vent est le même dans ces deux configurations de vol, on transpose dans le repère terrestre, et pour chaque configuration de vol, le résultat de la mesure de la vitesse par rapport au sol et les formules de calcul des composantes de la vitesse par rapport à l'air, et on prend pour équations à résoudre celles obtenues en identifiant la variation mesurée de la vitesse par rapport au sol de l'hélicoptère entre les deux configurations d'une paire, et la variation calculée à l'aide des formules de calcul, de la vitesse par rapport à l'air de l'hélicoptère.

7. Procédé selon l'une des revendications 3 ou 4, dans lequel on mesure, au cours de la première étape, la vitesse par rapport au sol et les angles d'attitude de l'hélicoptère pour chacune des configurations de vol, ainsi que l'instant de datation de celle–ci, et, pour former le système d'équations linéaires, on admet que le vent suit, dans le repère terrestre, une loi polynomiale en fonction du temps, de coefficients inconnus, on transpose la vitesse du vent dans le repère hélicoptère pour chaque configuration de vol, et on identifie, pour une pluralité de configurations de vols prises parmi les N configurations de vol, le résultat de la mesure de la vitesse par rapport au sol à la somme de la vitesse du vent et de la vitesse par rapport à l'air obtenue par les formules de calcul de $V_X$ et $V_Y$, de façon à déterminer en même temps les $n_x$ et $n_y$ coefficients multiplicatifs et les coefficients inconnus de la loi polynomiale du vent.

8. Procédé selon l'une des revendications 1 à 7, dans lequel, au cours de la première étape, on détermine les N configurations de vol différentes afin qu'un nombre minimal d'entre elles appartienne à chacun des sous–domaines du domaine des configurations possibles de l'hélicoptère en vol normal, chaque sous–domaine étant défini par un ensemble de plages de valeurs des grandeurs mesurées pour chaque configuration de vol.

9. Procédé selon la revendication 8, dans lequel, au cours de la première étape, on mesure, à l'aide de moyens anémobarométriques, le module de la vitesse de l'hélicoptère par rapport à l'air, et chaque sous–domaine est également défini par des plages pour la vitesse anémobarométrique ainsi mesurée.

10. Procédé selon l'une des revendications 8 ou 9, dans lequel on détermine les N configurations de vol pour que l'écart entre deux quelconques d'entre elles appartenant à un même sous–domaine soit supérieur à un seuil.

11. Procédé selon l'une des revendications 1 à 10, dans lequel, on mesure, au cours de la première étape, la vitesse par rapport au sol et les angles d'attitude de l'hélicoptère, ainsi que le module de la vitesse par rapport à l'air de l'hélicoptère, on admet que le vent moyen dans le repère terrestre est resté constant pendant le vol d'étalonnage, on forme une pluralité d'équations, chaque équation identifiant, pour une configuration de vol et dans le repère terrestre, le module mesuré de la vitesse par rapport à l'air et le module calculé de la différence entre la vitesse par rapport au sol et la vitesse du vent, ou soustrait membre à membre, et deux à deux, ces équations, on résout le système d'équations ainsi formé, pour calculer la vitesse du vent moyen pendant le vol d'étalonnage, et, au cours de la deuxième étape, on transpose la vitesse du vent moyen ainsi calculée dans le repère hélicoptère pour estimer la vitesse air comme somme de la vitesse par rapport au sol et de la vitesse du vent moyen.

12. Procédé selon l'une des revendications 1 à 11, dans lequel on mesure, au cours de la quatrième étape en vol normal, à l'aide de moyens anémobarométriques, la vitesse de l'hélicoptère par rapport à l'air, et en réponse à la valeur de la vitesse anémobarométrique ainsi mesurée, on sélectionne, comme valeur de la vitesse par rapport à l'air, le résultat de la mesure, celui du calcul par les formules de calcul déterminées au cours de la troisième étape, ou une combinaison des deux.

13. Dispositif pour la mise en oeuvre du procédé selon l'une des revendications 1 à 12, pour la détermination de la vitesse par rapport à l'air d'un hélicoptère en vue de son pilotage, hélicoptère (1) d'axe longitudinal OX, d'axe transversal OY et d'axe vertical OZ, pourvu d'un rotor de sustentation dont le pas collectif $P_O$, le pas cyclique longitudinal $P_X$ et le pas cyclique transversal $P_Y$ sont commandables, ainsi que d'un rotor anticouple dont le pas $P_Z$ est commandable, dispositif de détermination des deux composantes $V_X$ et $V_Y$ de cette vitesse sur les axes OX et OY, respectivement, en fonction des valeurs commandées desdits pas $P_O$, $P_X$, $P_Y$ et $P_Z$, des valeurs des angles d'inclinaison $\theta_X$ et $\theta_Y$ de l'hélicoptère autour des axes OY et OX respectivement, et de la valeur de l'accélération $\gamma_Z$ de l'hélicoptère selon l'axe OZ, dispositif caractérisé par le fait qu'il comprend :
– des moyens (3–10) pour mesurer, au cours d'une première étape au cours de laquelle est effectué un vol d'étalonnage faisant passer l'hélicoptère par une pluralité de N configurations de vol différentes, d'une part une pluralité de grandeurs ($S_X$, $S_Y$, $S_Z$, $\psi$ , $\theta$ , $\varphi$ , V) permettant d'estimer les vitesses $V_X$ et $V_Y$, et d'autre part les valeurs des pas $P_O$, $P_X$, $P_Y$ et $P_Z$, des angles $\theta_X$, $\theta_Y$ et de l'accélération $\gamma_Z$,
– des moyens (15, 2) pour estimer, au cours d'une deuxième étape, lesdites vitesses $V_X$ et $V_Y$ lors de chaque configuration de vol, pour calculer une première matrice des coefficients de corrélation de tous les couples possibles de variables d'un premier ensemble de variables comprenant la vitesse estimée $\hat{V}_X$ et des variables construites à partir des pas $P_O$, $P_X$, $P_Y$ et $P_Z$, des angles $\theta_X$ et $\theta_Y$ et de l'accélération $\gamma_Z$, et pour calculer une deuxième matrice de façon comparable à la première mais relative à un deuxième ensemble de variables comprenant la vitesse estimée $\hat{V}_Y$ et lesdites variables construites,

– des moyens (15, 2) pour déterminer, au cours d'une troisième étape, et à l'aide de ladite première matrice, la variable construite du premier ensemble la plus corrélée à la vitesse estimée $\hat{V}_X$, pour soustraire de cette vitesse estimée $\hat{V}_X$ ladite variable construite la plus corrélée multipliée par un coefficient multiplicatif choisi pour que la vitesse estimée ainsi modifiée soit totalement décorrélée de ladite variable construite la plus corrélée, pour calculer l'erreur commise en admettant que la valeur modifiée est nulle, pour calculer une première matrice modifiée comme a été calculée ladite première matrice mais en remplaçant la vitesse estimée $\hat{V}_X$ par la vitesse estimée modifiée, et pour recommencer ainsi jusqu'à ce que soient soustraites de la vitesse estimée $\hat{V}_X$ un nombre $n_x$ de variables construites du premier ensemble suffisant pour que l'erreur commise, en admettant que la valeur modifiée est nulle, soit inférieure à un seuil, de façon à disposer pour la valeur de la vitesse estimée $\hat{V}_X$ d'une formule de calcul, en fonction de $n_x$ variables construites du premier ensemble, et pour procéder de même pour la deuxième matrice de façon à disposer d'une formule semblable pour $\hat{V}_Y$, en fonction de $n_y$ variables construites du deuxième ensemble, et,

– des moyens (3, 7) pour mesurer, au cours d'une quatrième étape, en vol normal, les valeurs des pas $P_O$, $P_X$, $P_Y$ et $P_Z$, des angles $\theta_X$ et $\theta_Y$ et de l'accélération $\gamma_Z$, des moyens (15,2) pour calculer les vitesses $V_X$ et $V_Y$ à l'aide des formules déterminées au cours de la troisième étape et en réponse aux valeurs mesurées au cours de la quatrième étape, et des moyens (12) pour afficher, à l'usage du pilote de l'hélicoptère (1), les valeurs $V_X$ et $V_Y$ calculées.

## Claims

1. Method for determining the speed of a helicopter with respect to the air for piloting same, which helicopter (1) has a longitudinal axis OX, a transverse axis OY and a vertical axis OZ, with a lift rotor whose collective pitch $P_O$, longitudinal cyclic pitch $P_X$ and transverse cyclic pitch $P_Y$ are controllable, as well as an antitorque rotor whose pitch $P_Z$ is controllable, in which method the two components $V_X$ and $Y_Y$ of this speed along the two axes OX, OY are determined, respectively, as a function of the controlled values of said pitches $P_O$, $P_X$, $P_Y$ and $P_Z$, of the tilt angles $\theta_X$, $\theta_Y$ of the helicopter (1) about axes OY and OX, respectively, and of the acceleration value $\gamma_z$ of the helicopter along axis OZ, characterized in that

– during a first step, a calibration flight is made, causing the helicopter to pass through a plurality of N different flight configurations, for each of which both a plurality of magnitudes ($S_X$,$S_Y$,$S_Z$, $\psi$, $\theta$, $\varphi$, V) for estimating the speeds $V_X$ and $V_Y$ and the values of the pitches $P_O$, $P_X$, $P_Y$ and $P_Z$, of the angles $\theta X$, $\theta Y$ and of the acceleration $\gamma Z$ are measured,

– during a second step, said speeds $V_X$ and $Y_Y$ are estimated for each flight configuration, a first matrix is calculated of the correlation coefficients of all the possible pairs of variables of a first set of variables comprising the estimated speed $\hat{V}_X$ and variables constructed from the pitches $P_O$, $P_X$, $P_Y$ and $P_Z$, from angles $\theta_X$, $\theta_Y$ and from the acceleration $\gamma_Z$, and a second matrix is calculated comparably with the first one but relative to a second set of variables comprising the estimated speed $\hat{V}_Y$ and said constructed variables,

– during a third step, using said first matrix, the constructed variable of the first set the most corelated with the estimated speed $\hat{V}_X$ is determined, from this estimated speed $\hat{V}_X$ is substracted said most correlated constructed variable multiplied by a multiplicative coefficient chosen so that the estimated speed thus modified is totally decorrelated from the most correlated constructed variable, the error committed is calculated by admitting that the modified value is zero, a first modified matrix is calculated like said first matrix was calculated but replacing the estimated speed $\hat{V}_X$ by the modified estimated speed, and the operation is repeated until a number $n_x$ of constructed variables of the first set have been subtracted from the estimate speed $\hat{V}_X$, sufficient so that the error committed, assuming that the modified value is zero, is less than a threshold, so as to obtain, for the value of the estimated speed $\hat{V}_X$, a calculation formula as a function of the $n_x$ constructed variables of the first set, and the procedure is the same for the second matrix, so as to obtain a similar calculation formula for $\hat{V}_y$ as a function of $n_y$ constructed variables of the second set, and

– during a fourth step, in normal flight, the values of the pitches $P_O$, $P_X$, $P_Y$ and $P_Z$,of the angles $\theta_x$, $\theta_y$ and of the acceleration $\gamma_Z$ are measured, the speeds $V_X$ and $V_Y$ are calculated by applying the calculation formulae defined during the third step and in response to the values measured during the fourth step, and the calculated values $V_X$ and $V_Y$ are displayed for use by the pilot of the helicopter (1).

2. The method as claimed in claim 1, wherein the variables constructed during the second step from pitches $P_O$, $P_X$, $P_Y$ and $P_Z$, angles $\theta_x$, $\theta_y$ and acceleration $\gamma_z$ comprise :
   – simple variables of the first order, namely $P_O$, $P_X$, $P_Y$ and $P_Z$ and $\gamma_Z$,
   – combined variables of the first order namely $P_X- \theta_X$ and $P_Y- \theta_Y$ and
   – simple variables of the second order, namely the squares and the two by two products of the variables $P_O$, $P_X$, $P_Y$, $P_Z$, $\theta_X$, $\theta_Y$ and $\gamma_Z$.

3. The method as claimed in claim 1 or 2, wherein, at the end of the third step, the $n_x$ and $n_y$ multiplicative coefficients of the formulae for calculating $V_X$ and $V_Y$, respectively, are considered as unknowns, the results of the measurements made during the first step are brought forward into these formulae, so as to form at least one system of linear equations in which the $n_x$ and $n_y$ multiplicative coefficients are the unknowns, this system is solved and, in the formula for calculating $V_X$ and $V_Y$, the values of the $n_x$ and $n_y$ multiplicative coefficients, respectively, are corrected by replacing them by those thus defined.

4. The method as claimed in claim 3, wherein the system of linear equations is solved by the method of least squares.

5. The method as claimed in claim 3 or 4, wherein first and second linear equation systems are formed by identifying, for a plurality of flight configurations taken from the N flight configurations, the estimated speed $\hat{V}_X$ or $\hat{V}_Y$ obtained during the second step, with the quantity obtained by the corresponding calculation formula.

6. The method as claimed in claim 3 or 4, wherein, during the first step, the ground speed is measured as well as the attitude angles of the helicopter for each of the flight configurations and the time of dating same, and, for forming the system of linear equations, from the flight configurations pairs of flight configurations are chosen having dating times sufficiently close to assume that the wind is the same in these two flight configurations, the result of the measurement of the ground speed and the formula for calculating the components of the air speed are transposed in the Earth's reference frame and for each flight configuration, and as equations to be solved those are taken which are obtained by identifying the measured variation of the ground speed of the helicopter between the two configurations of a pair, and the variation calculated by means of the formulae for calculating the air speed of the helicopter.

7. The method as claimed in claim 3 or 4, wherein, during the first step, the ground speed and the attitude angles of the helicopter are measured for each of the flight configurations, as well as the time of dating same and, to form the system of linear equations, it is assumed that the wind, in the Earth's reference frame, follows a polynomial law as a function of time of unknown coefficients, the wind speed is transposed into the helicopter reference frame for each flight configuration, and, for a plurality of flight configurations taken from the N flight configurations, the result of the measurement of the ground speed is identified with the sum of the wind speed and the air speed obtained by the formulae for calculating $V_X$ and $V_Y$, so as to define at the same time the $n_x$ and $n_y$ multiplicative coefficients and the unknown coefficients of the polynomial law of the wind.

8. The method as claimed in any of the claims 1 to 7, wherein, during the first step, the N different flight configurations are determined so that a minimum number of them belongs to each of the sub–ranges of the range of possible configurations of the helicopter in normal flight, each sub–range being defined by a set of ranges of values of the magnitudes measured for each flight configuration.

9. The method as claimed in claim 8, wherein, during the first step, the modulus of the air speed of the helicopter is measured using anemobarometric means and each sub–range is also defined by ranges for the anemobarometric speed thus measured.

10. The method as claimed in claim 8 or 9, wherein the N flight configurations are determined so that the difference between any two of them belonging to the same rub–range is greater than a threshold.

11. The method as claimed in any of the claims 1 to 10, wherein, during the first step, the ground speed and the attitude angles of the helicopter are measured as well as the modulus of the air speed of the helicopter, it is assumed that the mean wind in the Earth's reference frame has remained constant during the cali-

EP 0 402 224 B1

bration flight, a plurality of equations is formed, each equation identifying, for a flight configuration in the Earth's reference frame, the measured modulus of the air speed and the calculated modulus of the difference between the ground speed and the wind speed, these equations are subtracted term by term and two by two, the system of equations thus formed is solved for calculating the mean wind speed during the calibration flight and, during the second step, the mean wind speed thus calculated is transposed in the helicopter's reference frame so as to estimate the air speed as the sum of the ground speed and the mean wind speed.

12. The method as claimed in any of the claims 1 to 11, wherein, during the fourth step in normal flight, the air speed of the helicopter is measured using anemobarometric means, and in response to the value of the anemobarometric speed thus measured, as value of the air speed is selected the result of the measurement, that of the calculation by the calculation formulae determined during the third step, or a combination of both.

13. Device for carrying out the method of one of the claims 1 to 12, for determining the speed of a helicopter with respect to the air for piloting same, which helicopter (1) has a longitudinal axis OX, a transverse axis OY and a vertical axis OZ, with a lift rotor whose collective pitch $P_O$, longitudinal cyclic pitch $P_X$ and transverse cyclic pitch $P_Y$ are controllable, as well as an antitorque rotor whose pitch $P_Z$ is controllable, device for determining the two components $V_X$ and $V_Y$ of this speed along the two axes OX, OY, respectively, as a function of the controlled values of said pitches $P_O$, $P_X$, $P_Y$ and $P_Z$, of the angles of bank $\theta_X$, $\theta_Y$ of the helicopter about axes OY and OX respectively, and of the acceleration value $\gamma_Z$ of the helicopter along axis OZ, device characterized in that it comprises :
– means (3–10) for measuring, during a first step during which a calibration flight is made causing the helicopter to pass through a plurality of N different flight configurations, both a plurality of magnitudes $(S_X, S_Y, S_Z, \psi, \theta, \varphi, V)$ for estimating the speeds $V_X$ and $V_Y$ and the values of the pitches $P_O$, $P_X$, $P_Y$ and $P_Z$, angles $\theta_X$, $\theta_Y$ and acceleration $\gamma_Z$,
– means (15,2) for estimating, during a second step, said speeds $V_X$ and $V_Y$ for each flight configuration, for calculating a first matrix of the correlation coefficients of all the possible pairs of variables of a first set of variables comprising the estimated speed $\hat{V}_X$ and variables constructed from pitches $P_O$, $P_X$, $P_Y$ and $P_Z$, angles $\theta_X$, $\theta_Y$ and acceleration $\gamma_Z$, and for calculating a second matrix comparably to the first but relative to a second set of variables comprising the estimated speed $\hat{V}_y$ and said constructed variables, means (15,2) for determining, during a third step, and using said first matrix, the constructed variable of the first set the most correlated with the estimated speed $\hat{V}_X$, for subtracting from this estimated speed $\hat{V}_X$ said most correlated constructed variable multiplied by a multiplicative coefficient chosen so that the estimated speed thus modified is totally decorrelated from said constructed variable most correlated variable, for calculating the error committed while assuming that the modified value is zero, for calculating a first modified matrix as said first matrix was calculated but replacing the estimated speed $\hat{V}_X$ by the modified estimated speed, and repeating the operation until a number $n_x$ of constructed variables the first set are substracted from the estimated speed $\hat{V}_X$ which are sufficient for the committed error, assuming that the modified value is zero, is less than a threshold, so as to obtain a calculation formula for the value of the estimated speed $\hat{V}_X$, as a function of the $n_x$ constructed variables of the first set, and to carry out a similar procedure for the second matrix so as to obtain a similar calculation formula for $\hat{V}_Y$, as a function of $n_y$ constructed variables of the second set, and means (3,7) for measuring, during a fourth step, in normal flight, values of the pitches $P_O$, $P_X$, $P_Y$, $P_Z$, angles $\theta_x$, $\theta_y$ and the acceleration $\gamma_Z$, means (15,2) for calculating the speeds $V_X$ and $V_Y$ by means of the calculation formulae defined during the third step and in response to the values measured during the fourth step, and means (12) for displaying the calculated values $V_X$ and $Y_Y$ for use by the pilot of the helicopter (1).

**Patentansprüche**

1. Verfahren zur Bestimmung der Geschwindigkeit eines Hubschraubers relativ zur Luft zum Zwecke seiner Steuerung, eines Hubschraubers (1) mit der Längsachse OX, der Querachse OY und der Vertikalachse OZ, ausgestattet mit einem Hubrotor, dessen kollektive Blattstellung $P_O$, longitudinale zyklische Blattstellung $P_X$ und transversale zyklische Blattstellung $P_Y$ steuerbar sind, sowie mit einem Heckrotor, dessen Blattstellung $P_Z$ steuerbar ist, ein Verfahren, bei dem man die beiden Komponenten $V_X$ und $V_Y$ dieser Geschwindigkeit auf den Achsen OX bzw. OY in Abhängigkeit von den gesteuerten Werten dieser Blattstellungen $P_O$, $P_X$, $P_Y$ und $P_Z$, von den Werten der Neigungswinkel $\vartheta_X$ und $\vartheta_Y$ des Hubschraubers (1) um die

19

Achsen OY bzw. OX und von dem Wert der Beschleunigung $\gamma_Z$ des Hubschraubers gemäß der Achse OZ bestimmt, ein Verfahren, dadurch gekennzeichnet daß:

– man im Verlauf eines ersten Schritts einen Kalibrierungsflug durchführt, wobei man den Hubschrauber eine Vielzahl von N verschiedenen Flugkonfigurationen durchlaufen läßt und für jede dieser Konfigurationen einerseits eine Vielzahl von Größen ($S_X$, $S_Y$, $S_Z$, $\psi$, $\vartheta$, $\varphi$, V), welche die Bestimmung der Geschwindigkeiten $V_X$ und $V_Y$ gestatten, und andererseits die Werte der Blattstellungen $P_O$, $P_X$, $P_Y$ und $P_Z$, der Winkel $\vartheta_X$ und $\vartheta_Y$ und der Beschleunigung $\gamma_Z$ mißt,

– man im Verlauf eines zweiten Schritts während jeder Flugkonfiguration die Geschwindigkeiten $V_X$ und $V_Y$ abschätzt, man eine erste Matrix der Korrelationskoeffizienten aller möglichen Variablenpaare eines ersten Satzes von Variablen berechnet, der die geschätzte Geschwindigkeit $\hat{V}_X$ und Variable umfaßt, die aus den Blattstellungen $P_O$, $P_X$, $P_Y$ und $P_Z$, den Winkeln $\vartheta_X$ und $\vartheta_Y$ und der Beschleunigung $\gamma_Z$ gebildet wurden, und man eine zweite Matrix von vergleichbarer Art wie die erste berechnet, die sich jedoch auf einen zweiten Satz von Variablen bezieht, der die geschätzte Geschwindigkeit $\hat{V}_Y$ und die besagten gebildeten Variablen umfaßt,

– man im Verlauf eines dritten Schritts mit Hilfe der ersten Matrix diejenige gebildete Variable des ersten Satzes bestimmt, die am stärksten mit der geschätzten Geschwindigkeit $\hat{V}_X$ korreliert ist, man von dieser geschätzten Geschwindigkeit $\hat{V}_X$ die am stärksten korrelierte gebildete Variable subtrahiert, die man mit einem multiplikativen Koeffizienten multipliziert hat, der so gewählt wurde, daß die derart veränderte geschätzte Geschwindigkeit von der am meisten korrelierten gebildeten Variablen völlig entkorreliert ist, man den begangenen Fehler unter der Annahme, daß der geänderte Wert gleich Null ist, berechnet, man eine erste abgeänderte Matrix berechnet, so wie man die erste Matrix berechnet hat, wobei man jedoch die geschätzte Geschwindigkeit $\hat{V}_X$ durch die geänderte geschätzte Geschwindigkeit ersetzt, und man diesen Vorgang wiederholt, bis man von der geschätzten Geschwindigkeit $\hat{V}_X$ eine ausreichende Anzahl $n_x$ gebildeter Variablen des ersten Satzes subtrahiert hat, so daß unter der Annahme, daß der geänderte Wert gleich Null ist, der begangene Fehler unterhalb eines Schwellenwerts liegt, so daß man für den Wert der geschätzten Geschwindigkeit $\hat{V}_X$ über eine Formel zur Berechnung in Abhängigkeit von $n_x$ gebildeten Variablen des ersten Satzes verfügt, und man ebenso hinsichtlich der zweiten Matrix verfährt, so daß man – in Abhängigkeit von $n_Y$ gebildeten Variablen des zweiten Satzes – über eine ähnliche Formel für $\hat{V}_Y$ verfügt, und

– man im Verlauf eines vierten Schritts im Normalflug die Werte der Blattstellungen $P_O$, $P_X$, $P_Y$ und $P_Z$, der Winkel $\vartheta_X$ und $\vartheta_Y$ und der Beschleunigung $\gamma_Z$ mißt, man die Geschwindigkeiten $V_X$ und $V_Y$ unter Anwendung der im Verlauf des dritten Schritts bestimmten Formeln und in Antwort auf die im Verlauf des vierten Schritts gemessenen Werte berechnet, und man die berechneten Werte $V_X$ und $V_Y$ für den Piloten des Hubschraubers (1) darstellt.

2.  Verfahren nach Anspruch 1, bei dem die im Verlauf des zweiten Schritts aus den Blattstellungen $P_O$, $P_X$, $P_Y$ und $P_Z$, den Winkeln $\vartheta_X$ und $\vartheta_Y$ und der Beschleunigung $\gamma_Z$ gebildeten Variablen umfassen:
    – einfache Variablen der ersten Ordnung, und zwar $P_O$, $P_X$, $P_Y$, $P_Z$ und $\gamma_Z$,
    – kombinierte Variablen der ersten Ordnung, und zwar $P_X$–$\vartheta_X$ und $P_Y$–$\vartheta_Y$, und
    – einfache Variablen der zweiten Ordnung, und zwar die Quadrate und die Produkte jeweils eines Variablenpaars der Variablen $P_O$, $P_X$, $P_Y$, $P_Z$, $\vartheta_X$, $\vartheta_Y$ und $\gamma_Z$.

3.  Verfahren nach einem der Ansprüche 1 oder 2, bei dem man am Ende des dritten Schritts die $n_x$ und $n_y$ multiplikativen Koeffizienten der Formeln zur Berechnung von $V_X$ bzw. $V_Y$ als Unbekannte ansieht, man in diese Formeln die Ergebnisse der im Verlauf des ersten Schritts durchgeführten Messungen einsetzt, um mindestens ein System von linearen Gleichungen zu bilden, dessen $n_x$ und $n_y$ multiplikative Koeffizienten die Unbekannten sind, man dieses System löst und man in den Formeln zur Berechnung von $V_X$ und $V_Y$ die Werte der $n_x$ bzw. $n_y$ multiplikativen Koeffizienten korrigiert, indem man sie durch diese so bestimmten Koeffizienten ersetzt.

4.  Verfahren nach Anspruch 3, bei dem man das System von linearen Gleichungen mittels der Methode der kleinsten Fehlerquadrate löst.

5.  Verfahren nach einem der Ansprüche 3 oder 4, bei dem man ein erstes und ein zweites System von linearen Gleichungen bildet, indem man für eine Vielzahl von Flugkonfigurationen, die aus den N Flugkonfigurationen herausgegriffen wurden, die im Verlauf des zweiten Schritts erhaltene geschätzte Geschwindigkeit $\hat{V}_X$ oder $\hat{V}_Y$ mit der mittels der entsprechenden Berechnungsformel erhaltenen Größe gleichsetzt.

6. Verfahren nach einem der Ansprüche 3 oder 4, bei dem man im Verlauf des ersten Schritts die Geschwindigkeit relativ zum Boden und die Winkel der Fluglage des Hubschraubers für jede der Flugkonfigurationen sowie den Zeitpunkt ihrer Datierung mißt und man, um das System von linearen Gleichungen zu bilden, unter den Flugkonfigurationen Paare von Flugkonfigurationen auswählt, deren Datierungszeitpunkte genügend nah beieinander liegen, um anzunehmen, daß der Wind bei den zwei Flugkonfigurationen derselbe ist, man für jede Flugkonfiguration das Ergebnis der Messung der Geschwindigkeit relativ zum Boden und die Formeln zur Berechnung der Komponenten der Geschwindigkeit relativ zur Luft in das terrestrische Bezugssystem transponiert, und man als zu lösende Gleichungen diejenigen nimmt, die man erhält, indem man die zwischen den beiden Konfigurationen eines Paares gemessene Veränderung der Geschwindigkeit des Hubschraubers relativ zum Boden und die mittels der Berechnungsformeln errechnete Veränderung der Geschwindigkeit des Hubschraubers relativ zur Luft gleichsetzt.

7. Verfahren nach einem der Ansprüche 3 oder 4, bei dem man im Verlauf des ersten Schritts die Geschwindigkeit relativ zum Boden und die Winkel der Fluglage des Hubschraubers für jede der Flugkonfigurationen sowie den Zeitpunkt ihrer Datierung mißt und man, um das System von linearen Gleichungen zu bilden, annimmt, daß der Wind in dem terrestrischen Bezugssystem einem polynomischen Gesetz in Abhängigkeit von der Zeit und von unbekannten Koeffizienten folgt, man für jede Flugkonfiguration die Geschwindigkeit des Winds in das Hubschrauber–Bezugssystem transponiert und man für eine Vielzahl von Flugkonfigurationen, die aus den N Flugkonfigurationen herausgegriffen wurden, das Ergebnis der Messung der Geschwindigkeit relativ zum Boden mit der Summe der Windgeschwindigkeit und der mittels der Formeln zur Berechnung von $V_X$ und $V_Y$ erhaltenen Geschwindigkeit relativ zur Luft gleichsetzt, so daß man gleichzeitig die $n_X$ und $n_Y$ multiplikativen Konstanten und die unbekannten Koeffizienten des polynomischen Gesetzes des Winds bestimmt.

8. Verfahren nach einem der Ansprüche 1 bis 7, bei dem man im Verlauf des ersten Schritts die N verschiedenen Flugkonfigurationen so bestimmt, daß jedem der Unterbereiche des Bereichs der möglichen Konfigurationen des Hubschraubers im Normalflug eine Mindestanzahl von diesen Konfigurationen angehört, wobei jeder Unterbereich durch einen Satz von Wertebereichen der für jede Flugkonfiguration gemessenen Größen definiert ist.

9. Verfahren nach Anspruch 8, bei dem man im Verlauf des ersten Schritts mit Hilfe anemobarometrischer Mittel den Absolutbetrag der Geschwindigkeit des Hubschraubers relativ zur Luft mißt, und jeder Unterbereich ebenfalls durch Bereiche für die so gemessene anemobarometrische Geschwindigkeit definiert ist.

10. Verfahren nach einem der Ansprüche 8 oder 9, bei dem man die N Flugkonfigurationen so bestimmt, daß die Abweichung zwischen zwei beliebigen Konfigurationen, welche zu einem gleichen Unterbereich gehören, oberhalb eines Schwellenwerts liegt.

11. Verfahren nach einem der Ansprüche 1 bis 10, bei dem man im Verlauf des ersten Schritts die Geschwindigkeit relativ zum Boden und die Winkel der Fluglage des Hubschraubers sowie den Absolutbetrag der Geschwindigkeit des Hubschraubers relativ zur Luft mißt, man annimmt, daß der mittlere Wind in dem terrestrischen Bezugssystem während des Kalibrierungsfluges konstant geblieben ist, man eine Vielzahl von Gleichungen bildet, wobei jede Gleichung für eine Flugkonfiguration und in dem terrestrischen Bezugssystem den gemessenen Absolutbetrag der Geschwindigkeit relativ zur Luft und den berechneten Absolutbetrag der Differenz zwischen der Geschwindigkeit relativ zum Boden und der Windgeschwindigkeit gleichsetzt, man Glied für Glied und paarweise diese Gleichungen subtrahiert, man das so gebildete System von Gleichungen löst, um die Geschwindigkeit des mittleren Winds während des Kalibrierungsfluges zu berechnen, und man im Verlauf des zweiten Schritts die so errechnete Geschwindigkeit des mittleren Winds in das Hubschrauber–Bezugssystem transponiert, um die luftbezogene Geschwindigkeit als Summe der Geschwindigkeit relativ zum Boden und der Geschwindigkeit des mittleren Winds abzuschätzen.

12. Verfahren nach einem der Ansprüche 1 bis 11, bei dem man im Verlauf des vierten Schritts im Normalflug mit Hilfe anemobarometrischer Mittel die Geschwindigkeit des Hubschraubers relativ zur Luft mißt und man in Antwort auf den Wert der so gemessenen anemobarometrischen Geschwindigkeit als Wert der Geschwindigkeit relativ zur Luft das Ergebnis der Messung, dasjenige der Berechnung mittels der im Verlauf des dritten Schritts bestimmten Berechnungsformeln oder eine Kombination beider Ergebnisse wählt.

13. Vorrichtung zur Durchführung des Verfahrens nach einem der Ansprüche 1 bis 12 zur Bestimmung der Geschwindigkeit eines Hubschraubers relativ zur Luft zum Zwecke seiner Steuerung, eines Hubschraubers (1) mit der Längsachse OX, der Querachse OY und der Vertikalachse OZ, ausgestattet mit einem Hubrotor, dessen kollektive Blattstellung $P_O$, longitudinale zyklische Blattstellung $P_X$ und transversale zyklische Blattstellung $P_Y$ steuerbar sind, sowie mit einem Heckrotor, dessen Blattstellung $P_Z$ steuerbar ist, eine Vorrichtung zur Bestimmung der beiden Komponenten $V_X$ und $V_Y$ dieser Geschwindigkeit auf den Achsen OX bzw. OY in Abhängigkeit von den gesteuerten Werten dieser Blattstellungen $P_O$, $P_X$, $P_Y$ und $P_Z$, von den Werten der Neigungswinkel $\vartheta_X$ und $\vartheta_Y$ des Hubschraubers um die Achsen OY bzw. OX und von dem Wert der Beschleunigung $\gamma_Z$ des Hubschraubers gemäß der Achse OZ, eine Vorrichtung, dadurch gekennzeichnet, daß sie umfaßt:

– Mittel (3–10), um im Verlauf eines ersten Schritts, während ein Kalibrierungsflug durchgeführt wird, der den Hubschrauber eine Vielzahl von N verschiedenen Flugkonfigurationen durchlaufen lädt, einerseits eine Vielzahl von Größen ($S_X$, $S_Y$, $S_Z$, $\psi$, $\vartheta$, $\varphi$, $V$), welche die Bestimmung der Geschwindigkeiten $V_X$ und $V_Y$ gestatten, und andererseits die Werte der Blattstellungen $P_O$, $P_X$, $P_Y$ und $P_Z$, der Winkel $\vartheta_X$ und $\vartheta_Y$ und der Beschleunigung $\gamma_Z$ zu messen,

– Mittel (15, 2), um im Verlauf eines zweiten Schritts während jeder Flugkonfiguration die Geschwindigkeiten $V_X$ und $V_Y$ abzuschätzen, um eine erste Matrix der Korrelationskoeffizienten aller möglichen Variablenpaare eines ersten Satzes von Variablen zu berechnen, der die geschätzte Geschwindigkeit $\hat{V}_X$ und Variable umfaßt, die aus den Blattstellungen $P_O$, $P_X$, $P_Y$ und $P_Z$, den Winkeln $\vartheta_X$ und $\vartheta_Y$ und der Beschleunigung $\gamma_Z$ gebildet wurden, und um eine zweite Matrix von vergleichbarer Art wie die erste zu berechnen, die sich jedoch auf einen zweiten Satz von Variablen bezieht, der die geschätzte Geschwindigkeit $\hat{V}_Y$ und die besagten gebildeten Variablen umfaßt,

– Mittel (15, 2), um im Verlauf eines dritten Schritts mit Hilfe der ersten Matrix diejenige gebildete Variable des ersten Satzes zu bestimmen, die am stärksten mit der geschätzten Geschwindigkeit $\hat{V}_X$ korreliert ist, um von dieser geschätzten Geschwindigkeit $\hat{V}_X$ die am stärksten korrelierte gebildete Variable zu subtrahieren, die man mit einem multiplikativen Koeffizienten multipliziert hat, der so gewählt wurde, daß die derart veränderte geschätzte Geschwindigkeit von der am meisten korrelierten gebildeten Variablen völlig entkorreliert ist, um den begangenen Fehler unter der Annahme, daß der geänderte Wert gleich Null ist, zu berechnen, um eine erste abgeänderte Matrix zu berechnen, so wie die erste Matrix berechnet wurde, wobei jedoch die geschätzte Geschwindigkeit $\hat{V}_X$ durch die geänderte geschätzte Geschwindigkeit ersetzt wird, und um diesen Vorgang zu wiederholen, bis von der geschätzten Geschwindigkeit $\hat{V}_X$ eine ausreichende Anzahl $n_x$ gebildeter Variablen des ersten Satzes subtrahiert worden sind, so daß unter der Annahme, daß der geänderte Wert gleich Null ist, der begangene Fehler unterhalb eines Schwellenwerts liegt, so daß für den Wert der geschätzten Geschwindigkeit $\hat{V}_X$ eine Formel zur Berechnung in Abhängigkeit von $n_x$ gebildeten Variablen des ersten Satzes zur Verfügung steht, und um ebenso hinsichtlich der zweiten Matrix zu verfahren, so daß – in Abhängigkeit von $n_y$ gebildeten Variablen des zweiten Satzes – eine ähnliche Formel für $\hat{V}_Y$ zur Verfügung steht, und

– Mittel (3, 7), um im Verlauf eines vierten Schritts im Normalflug die Werte der Blattstellungen $P_O$, $P_X$, $P_Y$ und $P_Z$, der Winkel $\vartheta_X$ und $\vartheta_Y$ und der Beschleunigung $\gamma_Z$ zu messen, Mittel (15, 2), um die Geschwindigkeiten $V_X$ und $V_Y$ mit Hilfe der im Verlauf des dritten Schritts bestimmten Formeln und in Antwort auf die im Verlauf des vierten Schritts gemessenen Werte zu berechnen, und Mittel (12), um die berechneten Werte $V_X$ und $V_Y$ für den Piloten des Hubschraubers (1) darzustellen.

FIG.1

FIG.2